# EUROPÄISCHE PATENTANMELDUNG

(11) **EP 4 817 847 A1**
(43) Veröffentlichungstag der Anmeldung: **07.10.2026**
(21) Anmeldenummer: 25167823.1
(22) Anmeldetag: 01.04.2025
(51) Int. Cl.: B29C 64/118, B29C 64/214, B29C 70/38, B33Y 10/00, B33Y 30/00

(54) **ULTRASCHALLDRUCKKOPF FÜR ENDLOSFASERVERSTÄRKTE THERMOPLASTE MIT INTEGRIERTER SCHNEIDEEINHEIT**

(71) Anmelder: Technische Universität Berlin, Körperschaft des öffentlichen Rechts, 10623 Berlin (DE); MTH Ultraschalltechnologie GmbH & Co. KG, 24558 Henstedt-Ulzburg (DE)
(72) Erfinder: Worms, Paul, 10969 Berlin (DE); Czyasny, Mathias, 12163 Berlin (DE); Gurlo, Alexander, 14089 Berlin (DE); Groth, Christian, 25436 Uetersen (DE)
(74) Vertreter: Hertin und Partner Rechts- und Patentanwälte PartG mbB

(57) **Zusammenfassung**

In einem ersten Aspekt betrifft die Erfindung einen Ultraschalldruckkopf zum Endlosfaser-Druck. Der Ultraschalldruckkopf umfasst eine Ultraschalleinheit umfassend eine schwingfähige Sonotrode und eine Konvertereinheit. Die Sonotrode besitzt einen Führungskanal zur Führung eines Filaments. Weiterhin umfasst der Ultraschalldruckkopf eine Schneideinheit. Die Schneideinheit ist dazu konfiguriert, das Filament innerhalb des Führungskanals der Sonotrode zu schneiden oder zu scheren.

In einem weiteren Aspekt ist die Erfindung auf eine Verwendung des Ultraschalldruckkopfes gerichtet.

## Beschreibung

In einem ersten Aspekt betrifft die Erfindung einen Ultraschalldruckkopf zum Endlosfaser-Druck. Der Ultraschalldruckkopf umfasst eine Ultraschalleinheit umfassend eine schwingfähige Sonotrode und eine Konvertereinheit. Die Sonotrode besitzt einen Führungskanal zur Führung eines Filaments. Weiterhin umfasst der Ultraschalldruckkopf eine Schneideinheit. Die Schneideinheit ist dazu konfiguriert, das Filament innerhalb des Führungskanals der Sonotrode zu schneiden oder zu scheren.

In einem weiteren Aspekt ist die Erfindung auf eine Verwendung des Ultraschalldruckkopfes gerichtet.

### Hintergrund und Stand der Technik

Ultraschall kann zum Verschweißen von Kunststoffen und Faserhalbzeugen verwendet werden, insbesondere im Automobil- und Luftfahrtsektor. Man spricht dabei vom sogenannten Ultraschallschweißen. Über eine Sonotrode, die typischerweise in einem Bereich von 15 - 40 kHz (Kilohertz) oszilliert, erfolgt ein zügiger und lokaler Energieeintrag in die Schweißstelle. Es sind hohe Temperaturgradienten erreichbar. Beim Ultraschallschweißprozess wirken primär Grenzflächenreibung und viskoelastische Effekte.

Der Energieeintrag erreicht beim Ultraschallschweißen auch untere Schichten bzw. Stränge und hat deshalb einige Vorteile gegenüber 3D-Druckverfahren, die hauptsächlich mit Konvektion arbeiten. Die Festigkeit in Z-Richtung beträgt bei extrusionsbasierten Verfahren in der Regel ca. 40-50 % der Festigkeit in der XY-Ebene. Ein Grund ist die schlechte Haftung zwischen den Lagen, da die extrudierten Stränge auf bereits abgekühlte Stränge abgelegt werden (heiß auf kalt). Durch den tieferen Energieeintrag mittels Ultraschall wird die Diffusion zwischen den Strängen verbessert und somit die Verschweißqualität deutlich erhöht.

Es sind auch kontinuierliche Ultraschweißprozesse bekannt, bei denen allerdings nur wenige Faserverbund-Lagen miteinander verschweißt werden, also flächige Bauteile erzeugt werden. In der Regel werden dafür große bzw. breite Sonotroden verwendet, die eine Betriebsfrequenz von ca. 20 kHz besitzen.

Dreidimensionale Objekte, die additiv durch das Ablegen einzelner Stränge hergestellt wurden, sind bisher nicht bekannt. Das Schneiden der Faser erfolgt in der Regel durch externe Schneidmechanismen. Unter extern ist vorzugsweise zu verstehen, dass der Schnitt des Filaments nicht innerhalb der Sonotrode stattfindet bzw. nicht innerhalb des Führungskanals des Filaments.

Im Stand der Technik sind eine Vielzahl von Ansätzen zur Ausgestaltung von Ultraschalldruckköpfen bekannt.

In der US 2014/0268607 A1 wird ein System und ein Verfahren für Erzeugung für Zwischenschichten offenbart, die mechanische oder elektrische Bindungen darstellen. Diese werden innerhalb einer dreidimensionalen Struktur einer elektronischen, elektromagnetischen oder elektromechanischen Komponente gebildet. Das System umfasst dabei eine 3D-Druckvorrichtung, eine erste Maschine und eine zweite Maschine. Bei der ersten Maschine kann es sich um ein Drahtvorschub- und Schneidesystem und eine Sonotrode handeln. Die Sonotrode kann hohl, massiv oder rotierend sein.

In der US 6626364 B2 wird ein Hochgeschwindigkeitssystem zum Einbetten von Antennendraht in eine nichtleitende (z. B. Kunststoff-) Folie offenbart, auf der elektronische Chips zur Herstellung einer Vielzahl von Chipkarten oder dergleichen angebracht sind. Der Antennendraht wird in der nichtleitenden Platte durch einen Ultraschall-Aktuator installiert, der relativ zur Platte auf und ab bewegt wird. Die Bewegung des Aktuators relativ zum Substrat wird durch die Wechselwirkung zwischen einem stationären Schwingspulenmagneten und einer Schwingspule gesteuert, die mit dem Ultraschallaktuator gekoppelt und mit der Gleitanordnung beweglich ist. Der Antennendraht wird dem Aktuator von einer Antennendrahtabwickelspule über eine Umlenkeinheit zugeführt. Die Antenne wird mittels einer magnetisch betätigten Schneidvorrichtung von der Versorgung abgeschnitten, die durch den Ultraschallantrieb eingebettet werden soll.

US 2002/0019683 A1 beschreibt ein System zur Herstellung eines Objekts durch Ultraschallverfestigung. Das System umfasst einen Speicher zum Speichern einer Beschreibung des herzustellenden Objekts. Ferner liegt eine Materialzuführung zur Bereitstellung von Materialinkrementen vor. Darüber hinaus liegt eine Ultraschallenergiequelle zur Verfestigung des Materials durch Erzeugung einer Fügefläche zwischen den Inkrementen vor. Zudem umfasst das System eine Materialentfernungseinheit zum Entfernen von überschüssigem Material, das nicht zum Formen des Objekts benötigt wird. Die Materialentfernungseinheit kann ein Schneidwerkzeug umfassen. Das Schneidwerkzeug kann ein Messer, ein Fräser, ein Schleifwerkzeug oder ähnliches sein. Mittels einer Steuerung wird eine aufeinanderfolgende Verfestigung der durch die Materialzuführung zugeführten Materialinkremente koordiniert und das überschüssige Material unter Verwendung der Materialentfernungseinheit entfernt. Hierdurch wird das Objekt gemäß der gespeicherten Beschreibung hergestellt. Das System kann nur lineare Bahnen fahren. Bei Kurven müsste der Druckkopf samt Schneidwerkzeugt aktiv mitgedreht werden.

In der US 6519500 B1 werden ein System und ein Verfahren beschrieben, um Objekte mittels Ultraschallverfestigung herzustellen. Das Verfahren umfasst eine Bereitstellung einer Beschreibung des herzustellenden Objekts. Daraufhin werden eine Vielzahl von Materialschichten mit dazwischenliegenden Kontaktflächen bereitgestellt. Die Herstellung des Objekts gemäß der Beschreibung erfolgt durch das Auslösen von Ultraschallschwingungen auf eine oder mehrere der Kontaktflächen, wodurch die Materialschichten direkt miteinander verfestigt werden, ohne dass Material in der Masse geschmolzen wird. Überschüssiges Material wird entfernt. Weiterhin wird die Herstellung des Objektes mittels des Auflegens eines Tapes beschrieben. Das Tape wird von einer Spule zugeführt und in Segmente geschnitten, um aufeinanderfolgende Abschnitte des Objekts zu erzeugen, wobei die Richtung der Tapesegmente vorzugsweise zwischen zwei orthogonalen Richtungen von Abschnitt zu Abschnitt wechselt. Die Sonotrode wird vorzugsweise so positioniert, dass die horizontalen Flächen zwischen den Abschnitten und die vertikalen Flächen zwischen benachbarten Bandsegmenten auf demselben Abschnitt verfestigt werden. Dabei kann eine Sonotrode mit einer Schneidespitze verwendet werden, um einen Materialpunkt abzutrennen und ihn mittels Ultraschall zu verschweißen.

In der CN106985385A wird ein Verbundwerkstoff gezeigt, der mittels einer Sonotrode hergestellt werden kann. Die Sonotrode weist einen Hohlkanal auf. Eine Schneideinheit befindet sich extern oberhalb der Sonotrode. Die Sonotrode schwingt horizontal, was eher bei metallischen Werkstoffen verwendet wird. Für Kunststoff schwingt die Sonotrode in der Regel senkrecht um einen höheren Energieeintrag zu erreichen. Außerdem ist der Druckkopf stark auskragend und die Bauplattform entsprechend klein. Bei einem Drucker mit bewegtem Druckkopf oder bei einem robotergeführten Druckkopf ist dieser Aufbau nachteilig wegen möglicher Kollisionen.

Die US 2014/0268607 A1 offenbart ein System und ein Verfahren zur Herstellung von Zwischenschichten, die mechanische oder elektrische Verbindungen darstellen können. Dabei werden Filamente in einer dreidimensionalen Struktur oder Komponente genutzt. Im Rahmen der Befestigung des Filaments kann ein Ultraschallschweißprozess eingesetzt werden. Auch eine Entfernung von überschüssigem material kann erfolgen, bei der eine Ultraschallschneidemaschine die Entfernung übernehmen kann.

US 6698089 B2 offenbart eine Vorrichtung zum Verdrahten eines drahtförmigen Leiters mit einem Substrat. Dabei wird während einer ersten Phase ein Drahtleiter über einen Anschlussbereich oder einen den Anschlussbereich zugeordneten Bereich fixiert. Ein Substrat wird relativ zum Anschlussbereich bzw. dem Anschlussbereich zugeordneten Bereich geführt. In einer zweiten Phase erfolgt die Verbindung des Drahtleiters mit dem Anschlussbereich über ein Verbindungsinstrument. Ein Ultraschallgenerator ist mit einer Zuführung des Drahtleiters verbunden, um den Drahtleiter mittels Ultraschall in Vibrationen zu versetzen.

CN106985385A beschreibt einen 3D-Drucker umfassend einen Ultraschalldruckkopf. Dabei werden Vibrationen mittels Ultraschall generiert, um das Material auf eine Platte abzulegen. Der 3D-Drucker umfasst weiterhin ein Schneidwerkzeug und Komponenten wie beispielsweise Führungsschienen und Plattformen. Das Schneidewerkzeug ist an einer beweglichen Plattform der Führungsschienen befestigt.

CN110328843A offenbart ebenfalls einen 3D-Drucker, bei der die Herstellung von Objekten mittels Ultraschall unterstützt wird. Eine Ultraschalleinheit umfasst einen vibrierenden Arm, einen Amplituden-Transformator und eine Vibrationsmaschine. Die Vibrationsmaschine ist fest auf der Druck-Unterstützung installiert und ein Ende des Amplituden-Transformators ist mit der Vibrationsmaschine verbunden. Der Amplituden-Transformators ist mit dem vibrierenden Arm und mit der Düse verbunden.

CN108714694B beschreibt eine Ultraschallvibrationsvorrichtung und bezieht sich auf eine Technologie zur additiven Fertigung und zielt darauf ab, das Problem zu lösen, dass eine Mikrostruktur einer Komponente zur additiven Fertigung relativ dick ist. Die Ultraschallschwingungsvorrichtung ist mit einem Bewegungsmechanismus der Vorrichtung für die additive Fertigung verbunden, um die Ultraschallschwingungsvorrichtung so zu steuern, dass sie sich in einem dreidimensionalen Raum bewegt. Der von einem Lasergenerator emittierte Laserstrahl wird durch die optische Faser übertragen und durchläuft dann die Ultraschallschwingungsvorrichtung, um auf die Pulverschicht auf der Druckkomponente einzuwirken, um ein Schmelzbad zu bilden. Die von der Ultraschallschwingungsvorrichtung erzeugte Ultraschallschwingung wirkt durch die Fokussierung eines gekrümmten Hohlraums am hinteren Ende der Vorrichtung direkt auf das Schmelzbad ohne Kontakt.

CN107199338A betrifft eine 3D-Druckdüse, die einen Ultraschallwandler, einen Ultraschall-Amplitudentransformator und eine Ultraschall-Verbindungsstange umfasst. Der Ultraschallwandler ist mit dem Ultraschall-Amplitudentransformator verbunden und die Ultraschall-Verbindungsstange ist mit dem Ultraschall-Amplitudentransformator verbunden. Auf der Ultraschall-Verbindungsstange ist ein Durchgangsloch vorgesehen, das dazu dient, ein zu druckendes Material zu transportieren und zu befördern. Das Durchgangsloch erstreckt sich bis zum Ende der Ultraschall-Verbindungsstange. Zudem ist eine Heizanlage vorgesehen, die das gedruckte Material auf einen schmelzflüssigen Zustand erhitzt.

WO 2011/010213 A2 offenbart ein Gerät zum selektiven Abscheiden von geschmolzenen Kunststoffmaterialien. Es umfasst eine Stütze, einen Ultraschallwandler, eine Sonotrode, eine Düse, die an einem Endteil der Sonotrode angebracht ist sowie eine Schmelzkammer, die über einen Entladekanal mit einer Abscheideöffnung in Verbindung steht. Ein innerer Kanal verläuft durch die Sonotrode und ermöglicht einen freien Durchgang für Kunststoffmaterial im festen Zustand. Der innere Kanal erstreckt sich entlang eines Abschnitts, dessen Querschnittsfläche durch einen kegelförmigen Abschnitt mit fortschreitender Verengung reduziert wird, wodurch der Entladekanal gebildet wird, der die Schmelzkammer enthält. Mehrere längs verlaufende Profile oder Rippen, die als Kegelgenerator angeordnet und winkelmäßig versetzt sind, ragen von der Innenwand des konischen Abschnitts der Schmelzkammer hervor, wobei ihr vielseitiges Ende auf die Eingangsseite der Schmelzkammer zeigt und dieser gegenüberliegt.

US 6036467 A betrifft ein Gerät und ein Verfahren für die Schmelzextrusion eines geschmolzenen thermoplastischen Polymers, z. B. in Form von Fasern und Vliesstoffen. Das Gerät und das Verfahren nutzen Ultraschallenergie, um den Schmelzextrusionsprozess zu unterstützen. Das Gerät umfasst ein Düsengehäuse, das eine Kammer definiert, die dafür ausgelegt ist, das geschmolzene thermoplastische Polymer aufzunehmen, sowie ein Mittel zur Anwendung von Ultraschallenergie auf einen Teil des geschmolzenen thermoplastischen Polymers. Das Düsengehäuse umfasst eine Kammer, die dafür ausgelegt ist, das geschmolzene thermoplastische Polymer aufzunehmen, eine Einlassöffnung, die dafür ausgelegt ist, die Kammer mit dem geschmolzenen thermoplastischen Polymer zu versorgen, und eine Extrusionsöffnung, die dafür ausgelegt ist, das geschmolzene thermoplastische Polymer aus der Kammer zu empfangen und das Polymer zu extrudieren. Das Mittel zur Anwendung von Ultraschallenergie befindet sich innerhalb der Kammer. Das Verfahren umfasst das Zuführen eines geschmolzenen thermoplastischen Polymers und das Extrudieren des geschmolzenen thermoplastischen Polymers durch eine Extrusionsöffnung im oben genannten Gerät, um eine Fadenlinie zu bilden. Das Mittel zur Anwendung von Ultraschallenergie ist zumindest teilweise von geschmolzenem thermoplastischen Polymer umgeben und ist darauf ausgelegt, die Ultraschallenergie auf das geschmolzene thermoplastische Polymer anzuwenden, während es in die Extrusionsöffnung übergeht. Während der Extrusion des geschmolzenen thermoplastischen Polymers wird das Mittel zur Anwendung von Ultraschallenergie angeregt. Die resultierende Fadenlinie wird dann gedämpft, um eine Faser zu bilden. Das Mittel zur Anwendung der Ultraschallenergie kann eine Ultraschallsonotrode sein.

CN101185986A beschreibt ein Schweißverfahren, das Ultraschall- und Gas-Metall-Lichtbogenschweißen kombiniert, um den Kavitationseffekt und den Vibrationseffekt des Ultraschalls zu nutzen. Dadurch wird erreicht, dass die beim Gas-Metall-Lichtbogenschweißen erzeugten Schweißtröpfchen noch in ihrer kleinen Form reibungslos an das Schweißbad übertragen werden. Während des Schweißens schrumpft der elektrische Lichtbogen unter dem Einfluss des Ultraschalls, wodurch die Steifigkeit des Lichtbogens erhöht wird. Dies hat einen signifikanten Anwendungsvorteil für das Schweißen in speziellen Positionen wie beim Rundum-Schweißen, beim Überkopfschweißen, beim Flachschweißen und beim Horizontal-Schweißen. Dabei ist ein Ultraschallgenerator mit einem Ultraschallwandler verbunden, um Ultraschallenergie in mechanische Vibration umzuwandeln. Ein Ultraschalltransformator vergrößert die Amplitude. Eine leitende Düse wird mit dem Ultraschalltransformator kombiniert. Ferner wird eine Schutzgasdüse am Vibrationsknoten des Transformators befestigt. Ein Schweißdraht ist mit der leitenden Düse verbunden, um die Schweißstromversorgung zu starten. Nach der Stabilisierung des Lichtbogens wird die Ultraschallstromversorgung eingeschaltet. Der Wandler wandelt die elektrische Energie in Vibration um und der Ultraschalltransformator verstärkt die Ultraschallamplitude, die an die schmelzende Elektrode übertragen wird.

CN106553341A offenbart eine Düse für kontinuierlich abgelegte faserverstärkte Verbundwerkstoffe. Sie umfasst einen Druckkopf, die Wand des Innenraums, einen Faserzapfen, einen Temperatursensor, einen Block, einen Heizstab, eine Harzdüse, einen Harzzapfen, Teflon und einen Ultraschallgenerator. Der Druckkopf ist abnehmbar mit dem unteren Ende des Faserzapfens verbunden und der Block ist abnehmbar mit dem oberen Ende der Innenraumwand verbunden. Der Heizstab und der Temperatursensor sind im Block eingefasst. Das obere Ende des Faserzapfens ist abnehmbar mit dem Block verbunden und das untere Ende des Faserzapfens ist abnehmbar mit dem unteren Ende der Innenraumwand verbunden. Die Harzdüse ist abnehmbar mit dem unteren Ende des Harzzapfens verbunden,und der Harzzapfen ist abnehmbar im Block befestigt. Das Innere des Harzzapfens ist mit Teflon ummantelt. Der Faserzapfen ist mit mehreren nach unten geneigten, schrägen Löchern versehen. Der Winkel der Achse des schrägen Lochs beträgt weniger als 90 Grad zum Winkel der Achse des Faserzapfens. Die Innenwand des Raums, der Block, die Harzdüse und der Harzzapfen bestehen aus Metall.

Im Stand der Technik sind auch unterschiedliche Anordnungen und Mechanismen bekannt, um Endlosfasern zu schneiden.

US 11214003 B2 offenbart eine Vorrichtung zur Herstellung eines dreidimensionalen Objekts aus einem flüssigen, fest werdenden Material. Die Vorrichtung umfasst eine Austrittsöffnung, die das additive Ausgeben des fest werdenden Materials zum Aufbau des dreidimensionalen Objekts ermöglicht. Eine Faserzuführungsvorrichtung führt ein Faser-Element zu und bettet es in das ausgestoßene Material ein. Die Faserzuführungsvorrichtung ist in Bezug auf den Fortschritt des Aufbaus des Objekts beweglich und kann das Faser-Element im Material ausrichten. Die Faserzuführungseinrichtung ist in der Nähe der Austrittsöffnung montiert und relativ zu dieser beweglich. Sie ist rotierend beweglich und kann um die Austrittsöffnung durch eine Antriebseinheit gedreht werden. Die Vorrichtung umfasst eine Ausgabeeinheit mit der Austrittsöffnung, wobei die Faserzuführungseinrichtung gelenkig an dieser befestigt ist und sich von einer Objektstütze bewegen lässt. Die Faserzuführvorrichtung umfasst eine Zwangsführung, die dazu konfiguriert ist, das Faserelement zu einem Konstruktionspunkt zu führen. Am Ende der Zwangsführung ist eine Schneideeinheit vorgesehen.

WO 2021/176404 A1 offenbart ein computerimplementiertes Verfahren. Dabei wird ein digitales Modell erworben, das zwei oder mehr räumliche Dimensionen eines herzustellenden Objekts enthält. Es erfolgt eine dreidimensionale Modellzerlegung des herzustellenden Objekts, wobei das Erstellen der Modellzerlegung das Segmentieren eines Teils des digitalen Modells in eine oder mehrere flächenbasierte Komponentenmodelle umfasst. Auf einer oder mehreren Oberflächen der flächenbasierten Komponentenmodelle werden eine oder mehrere Bahnen gebildet, die aus einem oder mehreren länglichen Faserstrangmodellen bestehen. Das Bilden einer oder mehrerer Bahnen umfasst das Betätigen eines Faserstrangschneiders in Abhängigkeit von einem oder mehreren der folgenden Faktoren: Einer minimalen Längsverschiebung des Faserstrang-Endes vom Umriss einer flächenbasierten Komponente, einer Längsentfernung des Bahn-Endes vom Umriss einer flächenbasierten Komponente und einer unteren Grenze für die Faserstranglänge.

In der DE 102018002545 A1 wird ein Verfahren zur Herstellung eines, vorzugsweise strangförmigen, Extrudates beschrieben. Dabei umfasst das Verfahren ein Einführen einer erhärtbaren Matrix und Fasern bzw. eines Rohextrudates in eine Pultrusionseinheit. Das Rohextrudat wird in der Pultrusionseinheit verformt, indem eine Außenseite des Rohextrudates während des Bewegens des Rohextrudates durch einen Pultrusionskanal der Pultrusionseinheit an wenigstens einer formgebenden Wandung der Pultrusionseinheit aufliegt. Das verformte Rohextrudates tritt aus der Pultrusionseinheit aus. Daraufhin wird aus der Pultrusionseinheit das ausgetretene Rohextrudat in eine Extrusionseinheit eingeführt. Das Rohextrudat wird in der Extrusionseinheit verformt und tritt aus einer Öffnung der Extrusionseinheit als Extrudat aus. Das Extrudat wird abgeschnitten, indem ein Schneidelement bewegt wird. Ein Bauteil der Extrusionseinheit führt eine Rotationsbewegung aus und mittels einer mechanischen Kopplung zwischen dem rotierenden Bauteil und dem Schneidelement wird das Schneidelement zum Abschneiden des Extrudates bewegt.

Die US 2020/0230878 A1 offenbart ein Verfahren zur Herstellung von Produkten aus einem faserverstärkten Verbundmaterial durch 3D-Drucken. Dazu wird ein Verbundfaserstrang erzeugt, wobei ein Faserbündel mit einem duroplastischen Binder mit einem Volumenanteil von 15-60 % imprägniert und einer Temperaturbehandlung unterzogen wird, bis der Binder ausgehärtet ist. Der Verbundfaserstrang wird als Filament einem Extruder zugeführt. Der Extruder wird auf eine Temperatur erhitzt, die den Schmelzpunkt des thermoplastischen Materials des Verbundfaserstrangs und die Glasübergangstemperatur des duroplastischen Binders überschreitet, während das thermoplastische Material mit dem Verbundfaserstrang kombiniert wird. Der Extruder wird entlang einer programmierten Trajektorie bewegt. Das Verbundmaterial, das durch die Kombination des thermoplastischen Materials mit dem Verbundfaserstrang erhalten wird, wird durch eine Düse auf eine Tischoberfläche extrudiert. Auf der Tischoberfläche wird der Verbundfaserstrang beim Abkühlen steif, sodass die Verbundfasern miteinander verbunden werden und ein Produkt gebildet wird. Im Prozess der Produktbildung wird ein Schnitt des Verbundfaserstrangs durch einen Schneidmechanismus ausgeführt und der Extruder ohne Extrusion von Verbundmaterial zu einem nächsten Abschnitt der programmierten Trajektorie bewegt. Anschließend wird die Extrusion des Verbundmaterials wieder aufgenommen.

EP 4008521 B1 offenbart ein Verfahren zum Herstellen eines Teils. Dabei wird ein kernverstärktes Endlosfilament in eine erwärmte Extrusionsdüse eingeführt. Das kernverstärkte Endlosfilament wird aus einem Düsenauslass der erwärmten Extrusionsdüse extrudiert. Es erfolgt eine Anwendung einer Kompressionskraft auf das extrudierte kernverstärkte Endlosfilament, wobei die Düse das kernverstärkte Endlosfilament auf eine Oberfläche kleben soll. Die Düse wird relativ zu der Oberfläche versetzt, um das kernverstärkte Endlosfilament von der Düse herauszuziehen. Verschiedene Varianten zur Ausführung eines Schneidemechanismus werden beschrieben, beispielsweise der Einsatz eines röhrenförmigen Scherenschneiders.

EP 4112274 A1 beschreibt einen Druckkopf zur additiven Fertigung von Faserverbundwerkstoffen. Der Druckkopf umfasst einen Zuführungskanal, ein Filament, einen Heizblock, eine Düse und eine Schneideeinheit. Das Filament gelangt durch den Zuführungskanal in die Düse. Das Filament wird dabei auf einem Druckbett abgelegt wird, wobei die Düse am Heizblock befestigt ist oder als Öffnung im Heizblock integriert ist. Die Schneideeinheit ist innerhalb des Heizblocks integriert ist und dazu konfiguriert, das Filament innerhalb des Heizblocks zu schneiden und/oder zu scheren.

Es ist ersichtlich, dass im Stand der Technik verschiedene Ansätze für Schneidemechanismen und Ultraschalldruckköpfe bekannt sind. Im Bereich der Ultraschalldruckköpfe gibt es den Bedarf einer Verbesserung eines Schneidemechanismus.

### Aufgabe der Erfindung

Aufgabe der Erfindung ist es, einen Ultraschalldruckkopf für das Drucken von Endlosfasern bereitzustellen, mit dem ein optimales Schneiden der Endlosfasern ausgeführt werden kann.

### Zusammenfassung der Erfindung

Die erfindungsgemäße Aufgabe wird gelöst durch die unabhängigen Ansprüche. Vorteilhafte Ausgestaltungen der Erfindung sind in den abhängigen Ansprüchen offenbart.

In einem ersten Aspekt betrifft die Erfindung einen Ultraschalldruckkopf zum Endlosfaser-Druck umfassend
- eine Ultraschalleinheit umfassend eine schwingfähige Sonotrode und eine Konvertereinheit, wobei die Sonotrode einen Führungskanal zur Führung eines Filaments besitzt;
- eine Schneideinheit,
dadurch gekennzeichnet, dass
die Schneideinheit dazu konfiguriert ist, das Filament innerhalb des Führungskanals der Sonotrode zu schneiden oder zu scheren.

Im Stand der Technik ist es bekannt, eine externe Schneideinheit zu benutzen. Das heißt bevorzugt, dass das Schneiden oberhalb der Sonotrode, der Konvertereinheit oder seitlich neben der Sonotrodenspitze stattfindet.

Nachteilig bei der Schneideinheit oberhalb der Sonotrode ist eine sehr lange Schneiddistanz, die den Mindestverfahrweg der Sonotrode bestimmt. Wenn die Fasern durch die Sonotrode und durch die Konvertereinheit gehen, beträgt die Schneiddistanz >= (größergleich) ca. 120 mm. Das bedeutet insbesondere, dass die geschnittenen Fasern aus dem System ausgetragen werden müssen, bevor zur neuen Extrusion angesetzt werden kann.

Wird die Faser seitlich unter die Sonotrodenspitze zugeführt, befindet sich die Schneideinheit (und eventuell die Vorschubeinheit) seitlich außerhalb der Sonotrodenspitze. Beim Verfahren der Sonotrode in der XY-Ebene, insbesondere bei Richtungswechsel und Kurvenfahrten, muss die Schneideinheit aktiv relativ zur Sonotrode oder der gesamte Druckkopf gedreht werden.

Wird die Faser seitlich in die Sonotrodenspitze eingeführt, gibt es Probleme bei der Führung der Fasern. Das brüchige Filament muss durch stärker gekrümmte Bahnen der Schneidstelle und Eintrittsstelle geführt werden. Außerdem kann das Filamentende beim Einführen in die Sonotrode mit der Sonotrode kollidieren oder der Eintrittsöffnung ausweichen, wenn es nicht ausreichend gut geführt ist. Die seitliche Schneideinheit und die eventuell daran gekoppelte Fördereinheit sind stark "auskragend", was starke Vibrationen des Druckkopfes bei höheren Verfahrgeschwindigkeiten und höheren Beschleunigungen erzeugt. Außerdem ist eine auskragende Schneideinheit hinderlich bei dreidimensional gekrümmten Flächen, wie z. B. beim 5-Achs-Roboter-3D-Druck.

Durch den erfindungsgemäßen Ultraschalldruckkopf werden die nachteiligen Effekte des Standes der Technik beseitigt.

In den obig aufgeführten Offenbarungen des Standes der Technik erfolgt die Ausbringung der Faser durch eine Düse. D. h., die Energieübertragung erfolgt durch eine (Ultraschall-) Relativbewegung entlang der Faser (Schwingungsrichtung in Faserrichtung), so dass die Matrix innerhalb der Sonotrode bzw. Düse aufschmilzt und das Faserbündel schmelzflüssig aus der Sonotrode austritt. Dies ist nur möglich, wenn zwischen dem Faserbündel und der Düse ausreichend hohe Scherkräfte entstehen. Hierzu muss das Faserbündel durch die Düse "gepresst" werden. Hierdurch können die Fasern gestaucht werden. Die eigentliche Applikation des Faserbündels auf dem Bauteil findet erst nach diesem Prozess statt und entspricht physikalisch weitestgehend dem bei einer rein thermischen Erweichung der Matrix.

Mittels des erfindungsgemäßen Ultraschalldruckkopfes kann das Faserbündel bzw. das Filament scherspannungsfrei durch den Sonotrodenkanal gleiten und erstmalig am Auslassradius der Sonotrode geringfügig erweichen, so dass es um den Radius gleiten kann. Die eigentliche Energiezufuhr erfolgt erst unmittelbar am Kontaktpunkt zwischen dem Faserbündel und dem Ablagepunkt durch eine quer zur Faserrichtung laufenden Schwingung. Der Vorteil ist eine nur kurzzeitige thermische Belastung der Matrix, eine gleichzeitige Verdichtung des Faserbündels und die Möglichkeit, das Faserbündel ausschließlich auf Zug zu belasten.

Durch den erfindungsgemäßen Ultraschalldruckkopf ergibt sich ein wesentlicher Vorteil darin, dass der Schneidprozess so nah wie möglich am Austritt stattfindet und dadurch die Auszuglänge des geschnittenen Filaments gering ist (<= (kleinergleich) ca. 10 mm). Dadurch sind sehr kurze Extrusionswege möglich. Die Distanz zwischen Schnittpunkt und Austritt bestimmt die Mindestextrusionslänge. Wenn die Extrusionswege kürzer sind, kann die Pfadplanung innerhalb einer Lage in Bezug auf das Bauteil lastgerechter gestaltet werden, da auch Bereiche mit kurzen Extrusionswegen mit Fasern ausgestattet werden können.

Ein weiterer Vorteil, der durch den erfindungsgemäßen Ultraschalldruckkopf erreicht wird, ist dass das brüchige Filament in dem Führungskanal stabil und schonend von einer bevorzugten Fördereinheit durch den Konverter, der Sonotrode, der Schneideinheit bis zur Sonotrodenspitze geführt wird. Mithin kann das Filament durch den Führungskanal derart geführt werden, dass es nicht übermäßig beansprucht wird, knickt oder reißt. Eine harte oder ungeschickte Führung könnte zu einer Beschädigung des Filaments führen, was die Extrusion beeinträchtigen würde. Eine gleichmäßige und stabile Führung des Filaments wird erreicht. Dies trägt zu einer konstanten Extrusion und damit zu einer gleichmäßigen Druckqualität bei.

Die Schneideinheit ist bevorzugt in der Sonotrode integriert. Die integrierte Schneideinheit ermöglicht einen sehr kompakten Aufbau des Druckkopfes. Dadurch wird die maximale Ausnutzung des Bauraums ermöglicht. Der kompakte Aufbau ist zudem weniger anfällig für Vibrationen. Durch den Freiraum im Bereich der Sonotrodenspitze eignet sich der Druckkopf für robotergeführtes 3D-Drucken und dreidimensional gekrümmte Oberflächen. Durch die höhere Kompaktheit liegt eine geringere Masse des Ultraschalldruckkopfes vor. Dies reduziert die Trägheit, was zu einer präziseren Steuerung bei schnellen Bewegungen und kurzen Druckzeiten führt. Dadurch werden Fehler wie Wellenbildung oder unsaubere Drucklinien vermieden.

Der Ultraschalldruckkopf bezeichnet im Sinne der Erfindung bevorzugt eine Einheit, die zumindest eine Ultraschalleinheit und eine Schneideinheit umfasst. Die Ultraschalleinheit selbst umfasst eine Konvertereinheit und eine Sonotrode. Die Sonotrode umfasst einen Führungskanal, in dem ein Filament geführt werden kann. Die Schneideinheit ist dazu konfiguriert, das Filament innerhalb des Führungskanals der Sonotrode zu schneiden.

Der Ultraschalldruckkopf ist vorzugsweise ein Druckkopf eines 3D-Druckers bzw. einer Vorrichtung zur additiven Fertigung. Der Ausdruck "Ultra" im Ultraschalldruckkopf weist daraufhin, dass zumindest ein Abschnitt und/oder eine Komponente des Ultraschalldruckkopfes Schwingungen bzw. Vibrationen im Ultraschallbereich ausführt. Der durchschnittlichen Fachperson ist bekannt, dass der Ultraschallbereich einen Frequenzbereich meint, der von ca. 15 kHz (Kilohertz) bis ca. 1 GHz (Gigahertz) reicht.

Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert.

Der Ultraschalldruckkopf ist insbesondere für einen Endlosfaserdruck geeignet. Endlosfaserdruck meint bevorzugt eine Technologie im Gebiet des 3D-Druckens, bei dem kontinuierliche Verstärkungsfasern in das gedruckte Objekt integriert werden, um seine mechanischen Eigenschaften zu verbessern. Diese Methode ermöglicht die Herstellung leichter, stärkerer und steiferer Teile und ist besonders nützlich für Anwendungen, die hohe Belastungen und Festigkeit erfordern. Im Endlosfaserdruck wird eine Basismaterialmatrix, wie beispielsweise ein thermoplastisches Kunststofffilament (z. B. PLA, ABS oder Nylon), verwendet, um die äußeren Schichten des Objekts zu drucken. Während des Druckvorgangs wird kontinuierlich eine Faser (z. B. Kohlefaser, Glasfaser oder Kevlar) in die Schichten eingebracht. Dabei kann es bevorzugt sein, dass das Filament als der zu verdruckende Werkstoff ein faserverstärktes Material umfasst. Ein faserverstärktes Material ist bekannt als eine Zusammensetzung, die eine Polymermatrix und Fasern umfasst. Die Polymermatrix dient der Einbettung der Fasern, während mittels der Fasern charakteristische Materialeigenschaften eingestellt werden können.

Im Kontext der Erfindung meint die Ultraschalleinheit die Kombination umfassend Sonotrode und Konvertereinheit. Die Konvertereinheit bezeichnet bevorzugt eine Komponente, die in der Lage ist, elektrische Energie in mechanische Schwingungen umzuwandeln, die dann auf die Sonotrode übertragen werden. Die Sonotrode bezeichnet eine Komponente, die dann die Schwingungen ausführt. Insofern ist die Sonotrode schwingfähig. Die Sonotrode führt dabei Schwingungen im Ultraschallbereich aus. Es kann bevorzugt sein, dass die Schwingungen der Sonotrode in einer vertikalen Achse erfolgen. Die vertikale Achse meint bevorzugt eine Achse, die sich entlang einer Längs- und/oder Fließrichtung eines Filaments erstreckt. Ebenfalls kann es bevorzugt sein, dass die Sonotrode horizontal schwingt, d. h. senkrecht zu einer Fließrichtung des Filamentes. Bei Bedarf kann es auch bevorzugt sein, dass eine kombinierte Schwindungsfähigkeit der Sonotrode gegeben ist. Das heißt, dass es bevorzugt sein kann, dass die Sonotrode vertikal und/oder horizontal schwingen kann.

Beispielsweise kann es sein, ohne auf dieses Beispiel beschränkt zu sein, dass die Konvertereinheit ein piezoelektrisches Material umfasst. Das piezoelektrische Material besitzt die Fähigkeit hat, elektrische Energie in mechanische Schwingungen umzuwandeln. Wenn eine Wechselspannung angelegt wird, verformt sich das piezoelektrisches Material der Konvertereinheit und erzeugt Schwingungen. Die Begriffe Konvertereinheit und Konverter können analog verwandt werden.

Die Schwingungen werden von dem Konverter bzw. der Konvertereinheit auf die Sonotrode übertragen, welche Schwingungen im Ultraschallbereich ausführt. Dass die Sonotrode schwingfähig (bzw. schwingungsfähig) ist meint bevorzugt, dass sie die Fähigkeit besitzt, in Schwingungen versetzt werden zu können, vorzugsweise auch dementsprechend in Schwingungen versetzt wird. Die Schwingungen werden an das zu verdruckende Material übertragen. Dies ist für eine Verarbeitung des Materials vorteilhaft, um beispielsweise Aspekte wie die Stabilität, Formgebung etc. zu optimieren.

Das Filament bezeichnet bevorzugt den Werkstoff, mit dem der 3D-Druck erfolgt und womit die Bauteile letztendlich hergestellt werden. Das Filament kann beispielsweise ein Kunststoffpolymer umfassen, ohne auf dieses Beispiel beschränkt zu sein. Beispielhafte Kunststoffpolymere können bevorzugt ausgewählt sein aus Polylactide (PLA), Acrylnitril-Butadien-Styrol-Copolymere (ABS) und/oder mit Glykol modifiziertes Polyethylenterephthalat (PET, mit Glykol PETG). Das Filament kann bevorzugt auch ein faserverstärktes Material umfassen. Ein faserverstärktes Material umfasst eine Polymermatrix und Fasern, d. h. insbesondere Kurzfasern bzw. Endlosfasern. Das Filament liegt bevorzugt in länglicher Form, z. B. in Drahtform und/oder auf Rollen konfektioniert vor. Beispielsweise kann das Filament auf einer Spule aufgerollt und über eine einfache Mechanik dem Führungskanal zugeführt werden. Vorzugsweise wird das Filament durch eine Fördereinheit dem Ultraschalldruckkopf zugeführt.

Durch den Führungskanal wird bevorzugt das Filament durch den Ultraschalldruckkopf transportiert. Der Führungskanal kann beispielsweise als eine röhrenartige Aussparung vorliegen, das bevorzugt im Wesentlichen geradlinig verläuft. Der Führungskanal kann bevorzugt einen Schlauch oder eine schlauchförmige Hülle umfassen, durch die das Filament geleitet und geführt wird. Im Kontext der Erfindung können verschiedene Ausgestaltungen für den Führungskanal in Frage kommen. Analog können für den Begriff Führungskanal auch die Ausdrücke "Zuführungskanal", "Zuführkanal", "Führungskanal", "Förderkanal" oder "Führungsschlauch" verwendet werden.

Die Schneideinheit ist bevorzugt ein Schneidewerkzeug für eine Zuschneidung und/oder Zerschneidung des Filaments. Die Schneideinheit kann in Richtung des Filaments bewegt werden, sodass das Filament an einer gewünschten Stelle und/oder einem gewünschten Bereich durchtrennt wird. Vorteilhafterweise ist es durch die Schneideinheit möglich, z. B. in einer Schicht mehrere verstärkte Bereiche einzufügen, zwei Bauteile ohne direkte Verbindung zu drucken oder auch Sollbruchstellen einzufügen. Vorteilhafterweise ist es mit der Schneideinheit möglich, eine Fertigung komplexer Bauteile, z. B. mit lokalen Verstärkungen, zu bewerkstelligen. Die Schneideinheit schneidet bevorzugt das Filament, bevor es auf ein Druckbett abgelegt wird.

Dass die Schneideinheit dazu konfiguriert ist, das Filament innerhalb des Führungskanals der Sonotrode zu schneiden oder zu scheren, meint im Kontext der Erfindung, dass der Ultraschalldruckkopf eine derartige Ausgestaltung aufweist, dass die Schneideinheit das Filament innerhalb des Führungskanals der Sonotrode schneidet. Beispielsweise kann es bevorzugt sein, dass die Schneideinheit in der Sonotrode integriert ist, um das Filament zu schneidet. Der abgeschnittene Teil des Filaments verlässt dann über eine Öffnung die Sonotrode und kann auf ein Druckbett gelangen.

Das Schneiden des Filaments bezeichnet bevorzugt das Trennen eines Stücks vom restlichen Filament. Eine Scherung bezeichnet das Einwirken einer Kraft oder eines Kräftepaars parallel zu einer bezogenen Fläche, sodass es zu einer Verformung mit weiteren Spannungskomponenten kommt. Der Ausdruck Scherkraft oder Schubkraft ist hierbei üblich. Das Kräftepaar kann aus der Wirkung eines versetzt angeordneten Kräftepaars entstehen, das auf das Filament wirkt und zu einer Verzerrung (Schubverzerrung) des zwischen den Kräften liegenden Bereichs führt. Das Kräftepaar kann zwei Kräfte umfassen, die in entgegengesetzten Richtungen wirken und zueinander parallel sind. Insbesondere kann durch das Scheren des Filaments ein Schnitt bzw. Schneiden resultieren. Das Kräftepaar kann auch durch ein auf das Filament wirkendes Moment (Drehmoment) hervorgerufen werden. Bei Scheren kann bevorzugt ein Winkel von ca. 90° im Wesentlichen ausreichen für einen zuverlässigen Schnitt des Filaments.

In einer weiteren bevorzugten Ausführungsform ist der Ultraschalldruckkopf dadurch gekennzeichnet, dass der Ultraschalldruckkopf eine Fördereinheit umfasst, die dazu konfiguriert ist, das Filament in den Führungskanal der Sonotrode einzuführen.

Die Fördereinheit bezeichnet vorzugsweise eine Komponente, die für die Einführung des Filaments in den Führungskanal ausgelegt ist. Die Fördereinheit sorgt dafür, dass das Filament mit der richtigen Geschwindigkeit und unter konstantem Druck in den Führungskanal gelangt, was für präzise Druckergebnisse und eine gleichmäßige Materialextrusion vorteilhaft ist.

Verschiedene Ausgestaltungen für die Fördereinheit können eingesetzt werden. So kann es beispielsweise bevorzugt sein, dass die Fördereinheit zwei sich gegenläufig zueinander drehende Rollen umfasst, welche über eine Drehbewegung der zwei Rollen das Filament in den Führungskanal des Ultraschalldruckkopfes einführen. Weitere beispielhafte Ausgestaltungen, ohne hierauf beschränkt zu sein, können einen Zahnradmechanismus und/oder einen Motor umfassen, um eine dauerhafte Einfuhr des Filaments in den Führungskanal sicherzustellen. Die Fördereinheit kann bevorzugt direkt an dem Ultraschalldruckkopf montiert sein. Hierdurch werden vorteilhafterweise weniger Wartungen und Anpassungsarbeiten benötigt, um eine Optimierung des Filamentweges zu ermöglichen. Durch die Nähe zum Führungskanal wird eine präzisere Kontrolle des Material- bzw. Filamentflusses ermöglicht, was besonders vorteilhaft ist für feine Druckdetails. Es kann ebenfalls bevorzugt sein, dass die Fördereinheit vom Ultraschalldruckkopf beabstandet positioniert ist, vorzugsweise aber weiterhin eine Wirkverbindung zum Ultraschalldruckkopf aufweist. Die Wirkverbindung kann beispielsweise durch eine derartige Verbindung bereitgestellt sein, dass mittels einer mechanischen Verbindung mithilfe der Fördereinheit das Filament in den Führungskanal eingeführt werden kann. Hierdurch wird vorteilhaft die Masse der Komponenten geringgehalten, die von einem Druckerarm bewegt werden muss, was bei besonders schnellen Druckgeschwindigkeiten und hohen Beschleunigungen von Vorteil ist. Hierdurch werden präzisere Druckergebnisse bei hohen Geschwindigkeiten ermöglicht.

In einer weiteren bevorzugten Ausführungsform ist der Ultraschalldruckkopf dadurch gekennzeichnet, dass die Sonotrode und die Konvertereinheit eine bauliche Einheit bilden, wobei die Sonotrode und die Konvertereinheit unlösbar miteinander verbunden sind.

Eine bauliche Einheit meint hierbei bevorzugt, dass die Sonotrode und die Konvertereinheit gemeinsam eine einzelne Komponente des Ultraschalldruckkopfes bilden. Die eine einzelne Komponente ist im Kontext der Erfindung die Ultraschalleinheit. Dabei kann es bevorzugt sein, dass die Ultraschalleinheit bzw. die bauliche Einheit noch weitere Komponenten zusätzlich zur Sonotrode und der Konvertereinheit umfasst. Mit anderen Worten ausgedrückt, ist die bauliche Einheit die Zusammenstellung umfassend Sonotrode und Konvertereinheit, die eine funktionelle Einheit des Ultraschalldruckkopfes bildet. Die bauliche Einheit ist bevorzugt ein physisches Konstrukt, dass die Sonotrode und die Konvertereinheit umfasst.

Zudem ermöglicht die Integration der Sonotrode und der Konvertereinheit in eine einzige bauliche Einheit eine kompakte und platzsparende Konstruktion. Hierdurch ist weniger Platzbedarf erforderlich, was vor allem für Anwendungen vorteilhaft ist, bei denen der Bauraum für den Einsatz des Ultraschalldruckkopfes begrenzt ist. Ferner wird vorteilhafterweise eine kürzere Strecke bereitgestellt, durch die das Filament geführt werden muss. Insbesondere liegen weniger Störkanten durch den Wegfall eines Verbindungsstückes vor.

In einer weiteren bevorzugten Ausführungsform ist der Ultraschalldruckkopf dadurch gekennzeichnet, dass der Ultraschalldruckkopf kühlbar ist, wobei eine Kühlluft zuerst durch die Konvertereinheit geleitet wird, anschließend über die Sonotrode strömt und dann auf ein Bauteil trifft.

Das Bauteil meint bevorzugt das Bauteil, das mittels des Druckkopfes herstellbar ist. Die Kühlluft kann durch eine Luftversorgung bereitgestellt werden, beispielsweise durch eine entsprechende Strömungskomponente zur Förderung von Luft. Die Luft kann durch die Konvertereinheit und anschließend über die Sonotrode zum Bauteil gelangen. Alternative und/oder zusätzliche Kühlmittel können ebenfalls vom Ultraschalldruckkopf umfasst sein, beispielsweise Kühlrippen.

Die Kühlung mittels Kühlluft ermöglicht eine kontrollierte Kühlung des mittels des Ultraschalldruckkopfes herstellbaren Bauteils. Hierdurch kann Materialverzug und/oder Warping während des Druckens vorteilhafterweise vermieden oder zumindest in erheblichen Maßen verringert werden. Insbesondere kann auch eine im Wesentlichen gleichmäßige Kühlung des Bauteils ermöglicht werden. Wenn das Bauteil gleichmäßig abkühlt, kann die Haftung zwischen den Schichten besser sein, da sich die vorherige Schicht nicht zu stark verzieht oder aufweicht, was die Stabilität des Bauteils verbessert. Darüber hinaus ist es von Vorteil, dass die Kühlung dafür sorgt, dass der applizierte Strang zügig konsolidiert. Auch die Komponenten des Ultraschalldruckkopfes werden vorteilhaft gekühlt, was insbesondere bei beheizten Bauräumen wichtig ist.

In einer weiteren bevorzugten Ausführungsform ist der Ultraschalldruckkopf dadurch gekennzeichnet, dass die schwingfähige Sonotrode mit einer Oszillationsfrequenz zwischen 15 kHz bis 50 kHz oszilliert.

Der o.g. Frequenzbereich hat sich als optimal für die Erwärmung üblicher thermoplastischer Materialien erwiesen, da diese bei den genannten Frequenzen eine hohe Dämpfung aufweisen. Höhere Frequenzen wären zwar vorteilhaft für eine möglichst kleine Baulänge der Sonotrode, durch die geringe erzielbare Amplitude sinkt jedoch die Eindringtiefe der Schallwellen in die Matrix, so dass diese nicht mehr homogen aufschmelzen.

In einer weiteren bevorzugten Ausführungsform ist der Ultraschalldruckkopf dadurch gekennzeichnet, dass die schwingungsfähige Sonotrode als eine Rundsonotrode ausgebildet ist.

Eine Rundsonotrode bezeichnet eine Sonotrode, die eine runde und rotationssymmetrische Form aufweist. Daher ist es im Kontext der Erfindung legitim, eine Rundsonotrode auch als eine rotationssymmetrische Rundsonotrode zu bezeichnen.

Vorteilhaft bei einer Rundsonotrode ist die Richtungsunabhängigkeit beim Drucken und auch die einfache Herstellbarkeit. Durch die Symmetrie gibt es darüber hinaus keine Unterschiede in der Amplitude.

In einer weiteren bevorzugten Ausführungsform ist der Ultraschalldruckkopf dadurch gekennzeichnet, dass der Führungskanal der Sonotrode einen Durchmesser von 0,5 - 3 mm, bevorzugt 0,75 bis 1,25 mm, besonders bevorzugt 0,85 bis 1,15 mm, ganz besonders bevorzugt 1 mm besitzt und/oder geradlinig ausgebildet ist.

Ein Führungskanal mit den angegebenen bevorzugten Bereichen für den Durchmesser sorgt dafür, dass die Schwingungen der Sonotrode in einem optimalen Bereich konzentriert werden.

Das bedeutet, dass die Schwingungsenergie gezielter und präziser übertragen wird. Dabei findet bevorzugt keine relevante Interaktion zwischen der Sonotrodenwand und dem Filament statt. Das Aufschmelzen des Filamentes findet bevorzugt an der Sonotrodenspitze statt, bei dem bevorzugt die Sonotrode mit einem Winkel von ca. 90° zum Filament steht. Der Führungskanal ist bevorzugt derart bemessen, dass das Filament ohne Scherkräfte hindurchgleiten kann. Am Austritt wird das Filament bei der Kurvenfahrt eine Abweichung von der Ablagetrajektorie erfahren, da der Kontaktpunkt zur Sonotrode auf einem Ring konzentrisch um die Achse wandert. Dies kann jedoch durch eine rechnerische Korrektur der Bahnkurve kompensiert werden.

In einer weiteren bevorzugten Ausführungsform ist der Ultraschalldruckkopf dadurch gekennzeichnet, dass ein Austrittsradius der Sonotrode zwischen 0,5 - 5 mm, bevorzugt zwischen 1 - 3 mm, besonders bevorzugt bei 1,8 mm liegt.

Bei dem Austrittsradius handelt es sich bevorzugt um die gekrümmte Strecke zwischen dem senkrechten Führungskanal und der Sonotrodenunterseite, d. h. den Austrittsbereich. Befindet sich an der Stelle kein Radius, wird beispielsweise eine Faser, die sich im Filament befindet, beim Austritt zerstört. Dieser Austrittsradius darf nicht zu klein sein, da sonst ein Bruch auftreten könnte. Allerdings sollte der Austrittsradius auch nicht zu groß sein, da andernfalls eine Faser des Filaments bei Kurvenfahrten schlecht abgelegt bzw. verzogen wird. Die genannten bevorzugten Bereiche für den Austrittsradius haben sich diesbezüglich als Optimum erwiesen, um eine sichere Ablegung des Filamentes gewährleisten zu können.

In einer weiteren bevorzugten Ausführungsform ist der Ultraschalldruckkopf dadurch gekennzeichnet, dass die Sonotrode aus einem Material besteht, welches ausgewählt ist aus einer Gruppe umfassend Titan, Aluminium, Stahl.

Mittels Titan wird vorteilhaft eine hohe Festigkeit, Korrosionsbeständigkeit und ein geringes Gewicht erzielt. Aluminium ist ein leichtes, kostengünstiges Material mit guter Wärmeleitfähigkeit und entsprechend vorteilhaft für die Sonotrode. Stahl bietet eine hohe Festigkeit, Haltbarkeit und Temperaturbeständigkeit und eignet sich besonders für Anwendungen, bei denen hohe Temperaturen eine Rolle spielen.

In einer weiteren bevorzugten Ausführungsform ist der Ultraschalldruckkopf dadurch gekennzeichnet, dass das Material aus dem die Sonotrode besteht, mindestens an einer Sonotrodenspitze umfassend den Austrittsradius ein gehärtetes Material umfasst und/oder eine harte Beschichtung aufweist.

Bevorzugt sind die Bereiche des Ultraschalldruckkopfes gehärtet, die zwischen der Führungskanal-Sonotrodenunterseite und der Sonotrodenunterseite liegen. Insbesondere sind bevorzugt die Bereiche gehärtet, in denen Filament, insbesondere Fasern des Filamentes, in Druckkontakt mit der Sonotrode kommen. Letzeres betrifft insbesondere die Sonotrodenspitze.

Ein gehärteter Bereich ist insbesondere vorteilhaft für eine zuverlässige Ablegung von Fasern des Filamentes, ohne oder nur mit geringem Risiken eines Bruches und/oder Verzuges.

In einer weiteren bevorzugten Ausführungsform ist der Ultraschalldruckkopf dadurch gekennzeichnet, dass das Schneiden des Filaments innerhalb des Führungskanals der Sonotrode mit einem Abstand von ≤30 mm, bevorzugt :520 mm, besonders bevorzugt :510 mm von der Austrittsstelle des Filaments an einem unteren Ende der schwingungsfähigen Sonotrode erfolgt.

Die genannten bevorzugten Abstände zwischen dem Schneiden des Filaments und der Austrittsstelle haben sich für verschiedene Anwendungen als vorteilhaft erwiesen. Die genannten Abstände, insbesondere ein Abstand von ≤30 mm, ist besonders nützlich beim Drucken mit einem Roboterarm und dreidimensional gekrümmten Druckpfaden.

Die genannten bevorzugten Abstände zwischen dem Schneidevorgang und der Austrittstelle der Sonotrode sorgen für eine präzisere Kontrolle des Schnitts, was zu einer besseren Qualität und Genauigkeit des Schnitts führt. Die Abstände ermöglichen eine schnelle und effektive Trennung des Filaments, was das Drucken mittels des Ultraschalldruckkopfes effizienter gestaltet. Durch den präziseren Schnitt wird das Filament optimal genutzt und die Wahrscheinlichkeit von evtl. Verstopfungen wird noch weiter verringert.

In einer weiteren bevorzugten Ausführungsform ist der Ultraschalldruckkopf dadurch gekennzeichnet, dass die Schneideinheit von der Schwingung der Sonotrode entkoppelt vorliegt.

Vorteilhafterweise verhindert die Entkopplung, dass die Schneideinheit direkt durch die Vibrationen der Sonotrode beeinflusst wird. Dadurch bleibt der Schnitt stabiler und die Schneideinheit wird nicht durch unerwünschte Schwingungen beeinträchtigt, was zu einer gleichmäßigen Schnittqualität und damit auch zu einem optimalen Druckprozess führt. Insbesondere kann das Schneiden präziser ausgeführt werden, da die Schneideinheit durch die Entkopplung von den Schwingungen nicht oder nur wenig beeinflusst wird. Hinzu kommt, dass die Schneideinheit weniger Belastung durch die Schwingungen erfährt. Infolgedessen wird der mechanische Verschleiß an der Schneideinheit reduziert, was die Lebensdauer verlängert. Die spart langfristig Kosten und Ausfallzeiten werden reduziert. Darüber hinaus werden durch die Entkopplung die Vibrationen, die in Form von Wärme übertragen werden könnten, verringert. Dies führt zu einer niedrigeren Temperaturentwicklung und verhindert mögliche temperaturbedingte Schäden an der Schneideinheit.

In einer weiteren bevorzugten Ausführungsform ist der Ultraschalldruckkopf dadurch gekennzeichnet, dass die Entkopplung der Schneideinheit von den Schwingungen der Sonotrode durch einen Spalt zwischen der Schneideinheit und der Sonotrode erfolgt. Hierdurch kann die Sonotrode frei schwingen.

Die Anbringung eines Spaltes zwischen der Sonotrode und Schneideinheit hat sich für die Entkopplung als besonders vorteilhaft herausgestellt. Der Spalt sorgt dafür, dass die Schneideinheit nicht direkt mit den Schwingungen der Sonotrode in Kontakt kommt. Dadurch werden die von der Sonotrode erzeugten Vibrationen nicht auf die Schneideeinheit übertragen. Dies verhindert eine unerwünschte Verstärkung von Vibrationen der Schneideinheit, die die Präzision und Effizienz der Schneidprozesse beeinträchtigen könnten. Die reduzierte Belastung durch übertragene Schwingungen kann die Lebensdauer sowohl der Sonotrode als auch der Schneideeinheit erhöhen. Schwingungen, die direkt auf die Schneideeinheit wirken, können zu erhöhter Abnutzung führen, was insbesondere durch einen Spalt zwischen der Sonotrode und der Schneideinheit zuverlässig vermieden wird. Überdies bietet der Spalt einen hinreichenden Stauraum zur Positionierung und/oder Wirkung der Schneideinheit, um eine Schneidefunktion für das Filament zu erfüllen. Ein Schnitt des Filaments durch die Schneideinheit wird ermöglicht, ohne dass die Vibrationen der Sonotrode der Schneideinheit und/oder dem Schnitt nachteilig beeinflusst. Der Spalt kann bevorzugt auch als Luftspalt bezeichnet werden. Der Spalt meint bevorzugt eine räumliche Lücke zwischen der Schneideinheit und der Sonotrode. Durch den Spalt wird ein direkter Kontakt zwischen der Schneideinheit und der Sonotrode vermieden.

In einer weiteren bevorzugten Ausführungsform ist der Ultraschalldruckkopf dadurch gekennzeichnet, dass die Schneideinheit im Wesentlichen senkrecht zum Führungskanal orientiert vorliegt und ein Statorelement und ein Rotorelement umfasst, wobei
- das Statorelement als statische äußere Hülse ausgebildet ist und das Rotorelement als rotierender innerer Zylinder ausgebildet ist, welcher anliegend an der äußeren Hülse rotiert, wobei der innere Zylinder ein Schneidelement umfasst, welches das Filament schneiden oder abscheren kann;
- oder alternativ das Statorelement in Form eines statischen inneren Zylinders ausgebildet ist und das Rotorelement in Form einer rotierenden äußeren Hülse ausgebildet ist, welche anliegend an dem inneren Zylinder rotiert, wobei die äußere Hülse das Schneidelement umfasst, welches das Filament schneiden oder abscheren kann.

Das Statorelement ist bevorzugt der stationäre Teil der Schneideeinheit und bleibt während des Betriebs unbewegt. Das Statorelement kann bevorzugt einen stabilen Rahmen oder ein Gehäuse bilden, das die anderen Komponenten zusammenhält. Das Rotorelement bezeichnet bevorzugt einen beweglichen Teil der Schneideeinheit, der vorzugsweise während des Betriebs eine Rotationsbewegung ausführen kann. Bevorzugt umfasst das Rotorelement ein Schneidelement, mit dem das Filament geschnitten oder geschert werden kann. Die Rotation des Rotorelementes kann bevorzugt mechanisch, beispielsweise durch einen Motor, und/oder elektromagnetisch gesteuert werden.

Das Rotorelement kann sich bevorzugt in Kontakt mit dem Filament drehen und sorgt hierdurch dafür, dass das Filament in Stücken und/oder Fäden beim Druckvorgang bereitgestellt wird, um eine saubere und präzise Form für das mittels des Ultraschalldruckkopfes herstellbare Bauteil zu erhalten. Das Statorelement bleibt fest und kann eine unterstützende Rolle beim Führen des Rotors übernehmen und/oder das Material in eine bestimmte Richtung lenken.

Die Kombination von Rotorelement und Statorelement ermöglicht eine präzise Kontrolle der Schneideprozesse, wodurch der Ultraschalldruckkopf in der Lage ist, auch besonders komplexe Geometrien oder feine Details zu erzeugen.

Das Statorelement kann als eine statische äußere Hülse ausgebildet und das Rotorelement als rotierender innerer Zylinder ausgebildet sein, welcher anliegend an der äußeren Hülse rotiert, wobei der innere Zylinder ein Schneidelement umfasst, welches das Filament schneiden oder abscheren kann.

Das Statorelement ist bevorzugt eine feststehende, äußere Hülse, die den gesamten Mechanismus des Schneidens oder Scherens stabilisiert und ein Gehäuse für den inneren Zylinder bildet. Diese Hülse hat bevorzugt eine zylindrische Form und bleibt während des Betriebs unbewegt. Sie kann vorzugsweise ein robustes und/oder widerstandsfähiges Material, wie z. B. Metall und/oder Kunststoff, umfassen, das die mechanischen Belastungen der rotierenden Komponente aufnehmen kann. Die äußere Hülse könnte auch eine spezielle Form oder Oberfläche aufweisen, die den Kontakt zwischen dem inneren Zylinder und dem Filament optimiert und die Drehbewegung des Rotorelements ohne zusätzliche Reibung oder Widerstand ermöglicht.

Die äußere Hülse trägt vorzugsweise zusätzlich zur Stabilisierung auch der Führung des inneren Zylinders bei, indem sie diesen auf seiner Achse fixiert, sodass er präzise und mit minimalem Aufwand rotieren kann. Im Kontext der Erfindung ist ersichtlich, dass die äußere Hülse bevorzugt auch einen Anschluss für die Stromversorgung oder eine andere Form der Energieübertragung enthalten kann, die das Rotorelement in Bewegung setzt (z. B. durch einen Motor).

Der innere Zylinder ist das rotierende Element der Schneideeinheit. Er ist bevorzugt innerhalb der äußeren Hülse angeordnet und dreht sich um eine zentrale Achse. Der Zylinder ist so konstruiert, dass er passgenau und anliegend an der inneren Oberfläche der äußeren Hülse rotiert.

Der innere Zylinder weist ein Schneideelement auf, das direkt mit dem zu verarbeitenden Filament in Kontakt kommt. Dieses Schneideelement könnte in Form einer scharfen Kante oder eines Messers auf der Außenseite des Zylinders ausgebildet sein. Das Schneideelement (oder Schneidelement) ist ein Teil der Schneideinheit und dient dem Schneiden oder Scheren des Filaments. Bei Rotation des Zylinders schneidet oder schert das Filament ab. Das Rotorelement dreht sich und sorgt dafür, dass das Filament (oder überschüssiges Material) entlang der Schnittkante präzise abgetrennt wird. Der Zylinder könnte eine spezielle Geometrie besitzen, etwa eine spiralförmige Struktur oder Wellenform, um das Filament effektiver zu zerschneiden oder abzuscheren (wie z. B. ein Wellenschliff hat oder eine Biegung wie beim Spindelmäher, ohne auf diese Beispiele beschränkt zu sein). Der innere Zylinder rotiert anliegend an der Innenseite der äußeren Hülse. Dieser enge Kontakt sorgt für eine präzise Führung des Rotors und stellt sicher, dass die Schneidkante immer richtig ausgerichtet ist und das Filament effizient geschnitten oder geschert wird.

Die Wechselwirkung zwischen der statischen äußeren Hülse (dem Statorelement) und dem rotierenden inneren Zylinder (dem Rotorelement) ermöglicht eine präzise Schneid- oder Schertechnik. Durch die enge Passung und die kontinuierliche Rotation des inneren Zylinders wird ein sauberer Schnitt mit minimalem Widerstand erzielt, was die Qualität des 3D-Drucks verbessert. Diese Anordnung von Statorelement und Rotorelement bietet eine einfache, aber effiziente Lösung zum Schneiden oder Abscheren von Filamenten während des Druckprozesses. Der innerere Zylinder rotiert anliegend an der äußeren Hülse und sorgt durch das Schneidelement für präzise und saubere Schnitte, was eine hohe Druckqualität unterstützt und gleichzeitig eine stabile und langlebige Funktionsweise gewährleistet.

Alternativ kann bevorzugt das Statorelement in Form eines statischen inneren Zylinders ausgebildet und das Rotorelement in Form einer rotierenden äußeren Hülse ausgebildet sein, welche anliegend an dem inneren Zylinder rotiert, wobei die äußere Hülse das Schneidelement umfasst, welches das Filament schneiden oder abscheren kann.

Das Statorelement in dieser Anordnung ist ein fester, unbeweglicher innerer Zylinder, der als stabile Grundlage für das gesamte System dient. Der innere Zylinder bleibt während des Betriebs unverändert und wird in die Struktur des 3D-Druckers integriert. er innere Zylinder führt und stützt das rotierende äußere Element präzise und sorgt dafür, dass die äußere Hülse in einem engen Kontakt mit ihm bleibt. Diese stabile Führung ist entscheidend für die genaue Ausrichtung des Schneidelementes und für die Kontrolle der Schneidbewegung.

Das Rotorelement in dieser Konfiguration ist die äußere Hülse, die sich um den statischen inneren Zylinder dreht. Diese äußere Hülse kann beispielsweise als eine verjüngte Hülse gestaltet sein, die vollständig oder nur teilweise den inneren Zylinder umgibt. Die äußere Hülse kann sich um den inneren Zylinder drehen, wodurch die notwendige Bewegung für den Schneideprozess erzeugt wird. Die Rotation könnte durch einen Motor oder einen anderen Mechanismus gesteuert werden, der die äußere Hülse in Bewegung versetzt.

Auf der inneren Oberfläche der äußeren Hülse befindet sich bevorzugt das Schneideelement, das in direktem Kontakt mit dem zu schneidenden Filament kommt. Das Schneidelement könnte bevorzugt auch hierbei eine Kante oder ein Messer sein, das entlang der Rotationsachse schneidet oder schert. In dieser Anordnung wird das Filament von der äußeren Hülse erfasst, und das Schneidelement schneidet oder schert das Filament während der Rotation ab.

Die Wechselwirkung zwischen dem inneren Zylinder (Statorelement) und der äußeren rotierenden Hülse (Rotorelement) bildet das Funktionsprinzip der Schneideeinheit in dieser bevorzugten Ausführungsform. Die äußere Hülse rotiert anliegend an der Innenseite des statischen inneren Zylinders. Der enge Kontakt sorgt für eine präzise Ausrichtung des Schneidelements und verhindert, dass sich die Hülse während der Rotation zu weit von der Schneidekante entfernt. Das Filament wird entlang des inneren Zylinders geführt, wobei die äußere Hülse das Material umschließt und es mit dem Schneideelement in Kontakt bringt. Beim Drehen der äußeren Hülse wird das Filament entlang der Schneidekante geführt, wobei das Schneideelement das Material abschneidet oder abschert.

Die alternative Anordnung, bei der das Statorelement als statischer innerer Zylinder und das Rotorelement als rotierende äußere Hülse ausgebildet ist, stellt eine effiziente und präzise Lösung für das Schneiden oder Abscheren von Filamenten dar. Durch die Rotation der äußeren Hülse wird das Schneideelement in Bewegung versetzt, um das Filament mit hoher Genauigkeit zu schneiden oder zu scheren. Die stabilisierte Führung durch den inneren Zylinder und die enge Passung zwischen den beiden Komponenten sorgen für eine hohe Präzision und Langlebigkeit dieser Schneideeinheit.

In einer weiteren bevorzugten Ausführungsform ist der Ultraschalldruckkopf dadurch gekennzeichnet, dass die Schneideinheit eine obere Eintrittsöffnung und eine untere Austrittsöffnung für das Filament aufweist, wobei sowohl die äußere Hülse als auch der innere Zylinder der Schneideeinheit jeweils eine obere Eintrittsöffnung sowie eine untere Austrittsöffnung aufweisen, wobei
- die untere Austrittsöffnung des inneren Zylinders gegenüber der oberen Eintrittsöffnung des inneren Zylinders verjüngt ist, sodass zwischen Eintrittsöffnung und Austrittsöffnung des inneren Zylinders ein Trichter entsteht und/oder
- die obere Eintrittsöffnung der äußeren Hülse gegenüber der unteren Austrittsöffnung der äußeren Hülse vergrößert ist.

Die Schneideeinheit umfasst hierbei einen inneren Zylinder, insbesondere als Statorelement, und eine äußere Hülse, insbesondere als Rotorelement. Zusätzlich zu diesen Komponenten liegen mindestens zwei Öffnungen für den Filamentdurchgang vor.

Die obere Eintrittsöffnung bezeichnet eine Öffnung für den Eintritt des Filamentes für das Schneiden oder Scheren. Die untere Eintrittsöffnung dient für den Durchgang des Filamentes nach dem Schneiden oder Scheren.

Die oberen Eintrittsöffnungen und unteren Austrittsöffnungen sind bevorzugt sowohl im inneren Zylinder als auch in der äußeren Hülse vorhanden.

Die obere Eintrittsöffnung dient als Einlass für das Filament, das in die Schneideeinheit gelangt. Diese Öffnung könnte relativ groß sein, um das Filament leicht aufnehmen zu können. Der Eintritt des Filaments könnte von einer Steuermechanik unterstützt werden, um den Fluss zu regulieren und sicherzustellen, dass das Filament immer korrekt in die Schneideeinheit eingeführt wird.

Bevorzugt ist die untere Austrittsöffnung des inneren Zylinders gegenüber der oberen Eintrittsöffnung des inneren Zylinders verjüngt, sodass zwischen Eintrittsöffnung und Austrittsöffnung des inneren Zylinders ein Trichter entsteht.

Anders ausgedrückt, kann die untere Austrittsöffnung des inneren Zylinders bevorzugt kleiner als die Eintrittsöffnung sein und sich in Richtung des unteren Endes verjüngen. Diese Form erzeugt einen Trichter innerhalb des inneren Zylinders, was bedeutet, dass das Filament nach dem Eintritt in den Zylinder durch den Verjüngungsbereich geführt wird. Der Trichter sorgt dafür, dass das Filament gezielt und gleichmäßig in den Schneidebereich weitergeleitet wird.

Die Trichterbildung durch die Verjüngung der unteren Austrittsöffnung des inneren Zylinders hat mehrere funktionale Vorteile. Der Trichter hilft dabei, das Filament präzise auf das Schneideelement der äußeren Hülse auszurichten. Indem das Filament durch den verjüngten Bereich geführt wird, wird verhindert, dass es sich verheddert oder falsch ausgerichtet wird, was zu ungleichmäßigen Schnitten führen könnte. Die Verjüngung des inneren Zylinders erzeugt einen gewissen Druckaufbau auf das Filament, was dessen Bewegung kontrolliert und sicherstellt, dass es kontinuierlich und gleichmäßig durch die Schneideinheit fließt. Dies fördert eine saubere Schnittführung. Durch die Verjüngung wird das Filament auf eine präzise Bahn gelenkt, sodass es weniger wahrscheinlich ist, dass es in der Schneideinheit blockiert oder gestaut wird. Dies verbessert die Effizienz des Schneidevorgangs und verhindert Fehler im Druckprozess.

Es kann ebenfalls bevorzugt sein, dass die obere Eintrittsöffnung der äußeren Hülse gegenüber der unteren Austrittsöffnung der äußeren Hülse vergrößert ist.

Dies hat eine Auswirkung auf die Art und Weise, wie das Filament in die Schneideeinheit gelangt. Eine größere Eintrittsöffnung ermöglicht es, dass das Filament einfach und problemlos eingeführt wird. Diese Öffnung kann einen breiteren Zugang bieten, um das Filament zu erfassen und in den Bereich zu führen, wo es bearbeitet oder geschnitten wird.

Im Gegensatz dazu ist die untere Austrittsöffnung der äußeren Hülse kleiner als die Eintrittsöffnung. Diese Verkleinerung sorgt dafür, dass das Filament gezielt durch die Schneideinheit geführt wird und einen festen, kontrollierten Ausgangspunkt erhält. Durch diese kleinere Austrittsöffnung wird das Filament durch die äußere Hülse hindurch "gepresst", was die Steuerung des Materialflusses erleichtert und zu einem saubereren Schnitt führen kann.

Das Filament wird in dieser bevorzugten Ausführungsform durch die obere Eintrittsöffnung der äußeren Hülse eingeführt. Aufgrund der größeren Eintrittsöffnung hat das Filament hier genügend Spielraum, um problemlos in den Schneide- oder Schervorgang hineinzugelangen, ohne dass es zu Verwicklungen oder Blockierungen kommt. Nach der Einführung wird das Filament durch den engeren Bereich der äußeren Hülse hindurch geführt, wobei es am Schneideelement der äußeren Hülse vorbeigeführt wird, das für das Schneiden oder Abscheren verantwortlich ist. Die äußere Hülse rotiert und auf ihrer inneren Oberfläche befindet sich ein Schneideelement, das das Filament schneidet oder schert, während es hindurchgeführt wird. Die Rotation sorgt dafür, dass das Filament kontinuierlich und mit gleichmäßigem Druck durch die Schneideeinheit gezogen wird, was zu einem sauberen und präzisen Schnitt führt.

Die bevorzugt größere obere Eintrittsöffnung erleichtert das Einführen des Filaments. Die größere obere Eintrittsöffnung hilft dabei, das Filament schnell und ohne Probleme in den Schneidebereich zu bringen. Eine größere Eintrittsöffnung ermöglicht es, eine größere Bandbreite von Filamentdurchmessern zu handhaben, da das Filament nicht durch eine zu enge Öffnung gezwungen oder bzgl. des Durchmesser eingeschränkt wird. Dies könnte besonders nützlich sein, wenn verschiedene Filamentarten oder -durchmesser verwendet werden.

Die kleinere Austrittsöffnung sorgt dafür, dass das Filament kontrolliert und genau abgeführt wird. Diese Form der Steuerung verbessert die Qualität des Schnitts und verhindert, dass das Filament während des Austritts aus der Schneideinheit zu stark bewegt oder deformiert wird. Durch die Verkleinerung der Austrittsöffnung wird das Filament durch die äußere Hülse hindurch "gepresst", was zusätzlichen Druck auf das Material ausüben kann. Dies kann zu einer besseren Kontrolle des Schneidprozesses führen und sicherstellen, dass das Filament nicht zu locker durch die Schneideinheit geführt wird, was die Präzision des Schnitts erhöht.

In einer weiteren bevorzugten Ausführungsform ist der Ultraschalldruckkopf dadurch gekennzeichnet, dass das Schneiden oder Scheren des Filaments während einer Oszillarionspause erfolgen kann und/oder während der Ultraschalldruckkopf sich im Betrieb befindet.

Im erfindungsgemäßen Kontext bedeutet dies bevorzugt, dass der Ultraschalldruckkopf derart ausgestaltet ist, dass die Schneideinheit während eines Betriebes und/oder während einer Oszillationspause das Filament schneidet oder schert.

Eine Oszillationspause bezeichnet bevorzugt eine Unterbrechung oder eine Pause in der Schwingung, die von der Sonotrode erzeugt wird. Eine Oszillationspause ist bevorzugt eine gezielt eingestellte Unterbrechung der Schwingungen in einem Zeitintervall.

Vorteilhaft kann die Oszillationspause genutzt werden, um den Schneidprozess besser zu steuern. Indem man den Zeitpunkt und die Dauer der Pausen anpasst, lässt sich der Schnittprozess noch genauer und effizienter gestalten, was insbesondere bei automatisierten Systemen von Vorteil ist. Der Schnitt während einer Oszillationspause ist auch bei besonders empfindlichen und/oder filigranen Filamenten von Vorteil. Auch wenn der erfindungsgemäße Ultraschalldruckkopf eine Entkopplung der Schneideinheit und der Sonotrode ermöglicht, kann nicht immer ausgeschlossen werden, dass feine Beschädigungen wie z. B. Mikrorisse am Filament auftreten. Der Schnitt in der Oszillationspause kann vorteilhafterweise das Risiko weiter minimieren für feine Abnutzungen, indem Schnittbelastungen verringert und ein schonenderes Trennen des Filamentes ermöglicht wird.

Auch das Schneiden des Filamentes während des Betriebes kann vorteilhaft sein. Im Betrieb der Sonotrode wird eine konstante Energie und Vibration auf das Filament übertragen. Diese regelmäßigen Schwingungen sorgen für eine stabile Prozessführung, die dazu beiträgt, den Schneidprozess gleichmäßig und konsistent zu halten. Der kontinuierliche Betrieb der Sonotrode beim Schneiden führt zu einer konstanten Energieabgabe, die den Produktionsprozess effizienter gestaltet. Insofern können beim Schneiden Filamentes höhere Durchsatzraten und damit eine verbesserte Produktivität erreicht werden.

In einer weiteren bevorzugten Ausführungsform ist der Ultraschalldruckkopf dadurch gekennzeichnet, dass die Schneideinheit derart ausgebildet ist, dass ein Schneidelement, das im Führungskanal der Sonotrode geführte Filament durch eine Translationsbewegung schneidet oder abschert, wobei das Schneidelement in einer Ruheposition außerhalb der Sonotrode vorliegt, und zum Schneiden anliegend durch einen im Wesentlichen senkrecht zum Führungskanal verlaufenden Schneidkanal in die Sonotrode eingeführt wird.

Das Schneidelement liegt bevorzugt außerhalb der Sonotrode in einer Ruheposition, was insbesondere bedeutet, dass es zunächst keinen Kontakt zum Filament hat, solange keine Schneidebewegung erforderlich ist. Diese Position schützt sowohl das Schneideelement als auch das Filament davor, auf eine ungewollte Weise geschnitten zu werden.

Das Schneideelement wird durch eine Translationsbewegung in den Schneidkanal eingeführt, wobei es eine im Wesentlichen senkrechte Bewegung zum Führungskanal beschreibt. Diese Bewegung kann bevorzugt durch eine Steuerung, beispielsweise eine mechanische Steuerung, pneumatische oder elektrische Steuerung erzeugt werden. Hierdurch kann das Schneidelement gezielt in den Schneidkanal gebracht werden. Die Steuerung kann bevorzugt auch mittels eines Kipphebels bzw. Antriebshebels erfolgen, der beispielsweise automatisch oder händisch gesteuert wird.

Der Schneidkanal verläuft im Wesentlichen senkrecht zum Führungskanal, in dem das Filament geführt wird. Der im Wesentlichen senkrechte Verlauf stellt vorteilhaft sicher, dass das Schneidelement exakt in die Richtung geführt wird, in die der Schnitt durchgeführt werden muss.

Der Schneidkanal ermöglicht es dem Schneidelement, präzise in die Sonotrode einzutreten und das Filament zu durchtrennen. Durch die Bewegung entlang des Schneidkanals wird das Schneidelement von der Ruheposition an die Schnittstelle geführt, wodurch das Filament entlang der vorgesehenen Linie geschnitten wird.

Wenn der Schneide- oder Schervorgang eingeleitet wird, kann bevorzugt das Schneidelement über eine Steuerung aktiviert werden, sodass es aus seiner Ruheposition heraus in den Schneidkanal eingeführt wird. Diese Bewegung erfolgt im Wesentlichen senkrecht zum Führungskanal, also senkrecht zur Ausrichtung des Filaments. Das Schneidelement dringt durch den Schneidkanal in die Sonotrode ein, um das Filament zu schneiden. Die Bewegung ist kontrolliert, sodass das Schneidelement nicht nur präzise, sondern auch in der richtigen Geschwindigkeit auf das Filament trifft. Nachdem der Schnitt durchgeführt wurde, wird das Schneideelement wieder in seine Ruheposition zurückgeführt, sodass es für den nächsten Schneidevorgang vorbereitet ist. Dies geschieht ebenfalls durch eine Translationsbewegung. In der Ruheposition bleibt das Schneideelement außerhalb der Sonotrode und ist von dem Filament entfernt, was verhindert, dass es während des weiteren Betriebs unbeabsichtigt in Kontakt mit dem Filament kommt.

Durch die gezielte Translationsbewegung wird das Filament mit höchster Präzision und Effizienz geschnitten. Der Schnitt erfolgt sehr sauber, mit minimalem Materialverlust und ohne die Gefahr von Verformungen oder Brüchen des Filaments. Weiterhin ermöglicht es die Ruheposition des Schneidelements außerhalb der Sonotrode, dass das gleiche Schneideelement für viele Schneidevorgänge verwendet werden kann, ohne unnötigen Verschleiß oder Abrieb. Außerdem kann die Positionierung des Schneideelements flexibel angepasst werden, um verschiedene Schneidanforderungen zu erfüllen.

In einer weiteren bevorzugten Ausführungsform ist der Ultraschalldruckkopf dadurch gekennzeichnet, dass zum Schneidkanal hinführend eine Verjüngung des Führungskanals in Form eines Trichters vorliegt und/oder der Führungskanal in einem Bereich zwischen dem Schneidkanal und dem Austrittspunkt des Filaments am unteren Ende der Sonotrode einen geringeren Durchmesser aufweist als in einem Bereich zwischen einem Eintrittspunkt des Filaments in die Sonotrode und dem Schneidkanal.

Wie obig erörtert, ist bevorzugt der Führungskanal die Passage, durch die das Filament durch den Ultraschalldruckkopf geführt wird. Der Führungskanal sorgt dafür, dass das Filament in der richtigen Ausrichtung und ohne Verwicklungen in den Schneidkanal gelangt. Die Verjüngung des Führungskanals, die in einem Trichter endet, kann bevorzugt das Filament schrittweise auf einen kleineren Bereich zuleiten, um es in die richtige Position für den Schneidvorgang zu bringen. Diese Verjüngung hilft, das Filament zu stabilisieren und es gleichmäßig zu führen. Die Form der Verjüngung sorgt dafür, dass das Filament gleichmäßig durch den Führungskanal fließt. Eine allmähliche Verkleinerung des Kanals ermöglicht es, den Materialfluss zu kontrollieren und plötzliche Bewegungen oder Störungen zu vermeiden, die während des Schneidens zu Ungenauigkeiten führen könnten.

Der Schneidkanal bezeichnet bevorzugt einen Bereich, in dem das Filament tatsächlich geschnitten wird. Der Schneidkanal verläuft bevorzugt im Wesentlichen senkrecht zum Führungskanal und führt das Filament direkt in die Zone, in der das Schneideelement eingreift. Der Schneidkanal endet bevorzugt im Wesentlichen direkt an der Stelle, an der das Schneidelement das Filament durchtrennen kann.

Es kann ebenfalls bevorzugt sein, dass der Führungskanal in einem Bereich zwischen dem Schneidkanal und dem Austrittspunkt des Filaments am unteren Ende der Sonotrode einen geringeren Durchmesser aufweist als in einem Bereich zwischen einem Eintrittspunkt des Filaments in die Sonotrode und dem Schneidkanal.

Der Führungskanal hat in dieser Ausführungsform einen Bereich zwischen einem Eintrittspunkt und dem Schneidkanal bevorzugt mit einem größeren Durchmesser. In diesem Bereich wird das Filament in den Ultraschalldruckkopf eingeführt und verläuft durch den Kanal mit relativ geringem Widerstand und Raum für leichte Bewegungsfreiheit. Der größere Durchmesser erleichtert das Einführen des Filaments und sorgt dafür, dass es ohne Verwicklungen oder Blockierungen den Kanal durchqueren kann. Dieser Abschnitt dient hauptsächlich der Führung und Ausrichtung des Filaments in die richtige Richtung, bevor es in den Schneidbereich gelangt.

In dem Bereich zwischen Schneidkanal und Austrittspunkt verjüngt sich der Durchmesser des Kanals, was zu einer konzentrierteren Führung des Filaments führt. Der kleinere Durchmesser sorgt dafür, dass das Filament genauer ausgerichtet und stabilisiert wird, bevor es den Schneidkanal erreicht. Diese Verengung des Kanals kann dazu beitragen, das Filament zu zentrieren und seine Bewegung zu kontrollieren, sodass es nicht unkontrolliert im Kanal verläuft.

Der größere Kanalabschnitt ermöglicht es dem Filament, ungehindert und mit ausreichend Spielraum in den Ultraschalldruckkopf eingeführt zu werden. Dieser Abschnitt des Kanals erleichtert das Positionieren und die Handhabung des Filaments, da keine übermäßige Reibung oder enge Führung auftritt. Dies ist besonders wichtig, wenn das Filament automatisch eingeführt wird oder es eine hohe Flexibilität benötigt, um sich leicht in den Druckkopf zu bewegen.

Der reduzierte Durchmesser des Führungskanals vor dem Schneidkanal stellt sicher, dass das Filament in seiner Ausrichtung stabilisiert wird, um den Schneideprozess zu optimieren. Wenn das Filament zu diesem engeren Abschnitt gelangt, wird es kontrolliert geführt, sodass es genau an der richtigen Stelle positioniert ist, wenn das Schneidelement in den Schneidkanal eingeführt wird. Der geringere Durchmesser hilft dabei, das Filament zu zentrieren und es präzise auf die Schneidezone auszurichten, was die Wahrscheinlichkeit von ungenauen Schnitten oder Materialabweichungen verringert.

Durch den größeren Durchmesser wird eine einfache Führung des Filamentes in dem Führungskanal erreicht. Dies trägt zu einer reibungslosen Handhabung des Filaments bei. Die Verengung des Kanals sorgt jedoch dafür, dass das Filament kurz vor dem Schneidvorgang zentriert und stabilisiert wird, was die präzise Positionierung des Materials für den Schnitt ermöglicht. Der Übergang von einem breiteren zu einem engeren Durchmesser bietet eine kontrollierte Ausrichtung des Filaments. Wenn das Filament in den engeren Abschnitt des Kanals gelangt, wird es exakt ausgerichtet, was den Schneidevorgang vereinfacht. Dies führt zu einem saubereren, präziseren Schnitt, da das Filament in der richtigen Position für die Eingabe des Schneidelements ist. Die genaue Führung und Stabilisierung des Filaments mit der verengten Passage ermöglicht eine höhere Kontrolle über den Druckprozess. Das Filament wird mit minimaler Bewegung und in einer präzisen Position durch den Druckkopf geführt, was zu einer besseren Druckqualität führt.

In einem weiteren Aspekt betrifft die Erfindung eine Verwendung eines erfindungsgemäßen oder bevorzugten Ultraschalldruckkopfes für Anwendungen in der Fertigungs- und Verbindungstechnologie, wie Additive Fertigung (3D-Druck), Verschweißen von Kunststoffen, Verarbeitung von Faserhalbzeugen, Ultraschallschweißen, Aufdrucken von Faserstrukturen auf Kunststoffbauteile.

Der durchschnittliche Fachmann erkennt, dass technische Merkmale, Definitionen und Vorteile des erfindungsgemäßen Ultraschalldruckkopfes und von bevorzugten Ausführungsformen des Ultraschalldruckkopfes auch für eine Verwendung des Ultraschalldruckkopfes gelten, und umgekehrt.

Die additive Fertigung, auch als 3D-Druck bekannt, bezeichnet einen Fertigungsprozess, bei dem Material schichtweise hinzugefügt wird, um ein dreidimensionales Objekt zu erstellen. Dabei kann der Ultraschalldruckkopf in mehreren Bereichen der additiven Fertigung hilfreich sein. Der Ultraschalldruckkopf kann dabei helfen, das Filament präzise zu schneiden oder zu trennen, insbesondere bei Materialwechseln oder der Notwendigkeit, das Filament in spezifische Längen zu bringen. Der Ultraschalldruckkopf kann auch dazu verwendet werden, Material zu schmelzen oder zu kombinieren, was eine spezifische Anwendung in der Verarbeitung von thermoplastischen Materialien während des 3D-Druckprozesses ermöglicht. Die Ultraschallschwingungen können Material schnell und effizient erhitzen, was eine bessere Verschmelzung von Schichten im 3D-Druckverfahren fördern kann.

Das Verschweißen von Kunststoffen ist ein Verfahren, bei dem zwei Kunststoffteile durch Wärme und/oder Druck miteinander verbunden werden. Der Ultraschalldruckkopf kann in dieser Anwendung durch Ultraschallschweißen verwendet werden. Ultraschallschweißen nutzt hochfrequente Schwingungen, die auf die zu schweißenden Teile übertragen werden. Diese Schwingungen erzeugen Reibungswärme, die die Kunststoffoberflächen schnell aufschmilzt, sodass sie miteinander verschweißt werden. Der Ultraschalldruckkopf kann hierbei verwendet werden, um die Schwingungen präzise zu übertragen und den Schweißvorgang zu steuern.

Die Verarbeitung von Faserhalbzeugen bezieht sich bevorzugt auf die Bearbeitung und Formgebung von Materialen, die Fasern oder Faserverbundwerkstoffen umfassen, wie zum Beispiel faserverstärkte Kunststoffe. In der 3D-Drucktechnologie und bei anderen Fertigungsprozessen kann der Ultraschalldruckkopf zum Einsatz kommen, um Fasern oder Faserstrukturen präzise zu platzieren und in die gewünschte Form zu bringen. Der Ultraschalldruckkopf kann beispielsweise verwendet werden, um Fasern (z. B. Glasfasern oder Kohlenstofffasern) während des Druckprozesses oder in der Fertigung von Verbundwerkstoffen gezielt einzubringen. In einigen Fällen kann der Ultraschalldruckkopf auch dazu genutzt werden, Fasern in Thermoplasten einzubetten, um faserverstärkte Kunststoffverbundmaterialien zu erzeugen. Wenn Faserhalbzeuge auf Kunststoffbauteile aufgebracht werden, können Ultraschallschwingungen helfen, die Fasern zu positionieren und durch Ultraschallschweißen dauerhaft in das Kunststoffbauteil zu integrieren. Diese Methode kann besonders vorteilhaft sein, wenn eine starke, langlebige Verbindung zwischen den Fasern und der Kunststoffmatrix erforderlich ist.

Ultraschallschweißen bezeichnet bevorzugt ein Verfahren, bei dem hochfrequente Schallwellen in das Material eingebracht werden, um eine präzise, schnelle und saubere Verbindung zwischen Materialien zu erzeugen. Ultraschallschweißen ist besonders effektiv bei der Verbindung von Kunststoffen, Metallen oder Kompositmaterialien und kommt insbesondere dann zum Einsatz, wenn präzise, schnelle und stoffschonende Schweißverbindungen erforderlich sind.

Der Ultraschalldruckkopf kann beispielsweise auch als Schweißkopf genutzt werden, der die Ultraschallschwingungen erzeugt, die dann in das Material übertragen werden. Beim Ultraschallschweißen wird das Filament oder der Kunststoff durch die Vibrationen schnell erhitzt und geschmolzen, wodurch eine starke und dauerhafte Verbindung entsteht. Hierdurch werden Materialien ohne den Einsatz von Wärmequellen, Füllstoffen oder Lösungsmitteln miteinander geschweißt.

Das Aufdrucken von Faserstrukturen auf Kunststoffbauteile ist eine Anwendung, bei der Fasern, wie z. B. Glasfasern oder Kohlenstofffasern, gezielt auf eine Materialoberfläche, z. B. eine Kunststoffoberfläche aufgebracht werden, um die Festigkeit, Flexibilität oder andere mechanische Eigenschaften zu verbessern. Der Ultraschalldruckkopf kann in diesem Zusammenhang verwendet werden, um Faserstrukturen auf Kunststoffbauteilen präzise und dauerhaft anzubringen.

Der Ultraschalldruckkopf kann auch dafür eingesetzt werden, um Fasern direkt auf das Kunststoffbauteil zu drucken. Die hochfrequenten Schwingungen des Ultraschalldruckkopfes können die Fasern so verarbeiten, dass sie in die Kunststoffoberfläche integriert und dort stabilisiert werden.

Während des Druckvorgangs könnte der Ultraschalldruckkopf nicht nur helfen, die Fasern präzise zu positionieren, sondern auch durch Ultraschallschweißen die Verbindung zwischen den Fasern und dem Kunststoffbauteil zu verstärken. Diese Technik stellt sicher, dass die Fasern fest mit dem Bauteil verbunden sind und die gewünschten mechanischen Eigenschaften erreicht werden. Das Aufdrucken von Faserstrukturen auf Kunststoffbauteile kann deren Steifigkeit, Zugfestigkeit, Druckfestigkeit und thermomechanische Stabilität erheblich verbessern. Diese Technik wird oft in der Herstellung von hochfesten, leichten Bauteilen verwendet, z. B. in der Luftfahrt, Automobilindustrie und/oder bei Sportgeräten.

### Figuren

Im Folgenden soll die Erfindung anhand von Figuren beispielhaft näher erläutert werden, ohne auf diese beispielhaften Erläuterungen beschränkt zu sein.

Kurzbeschreibung der Figuren
- **Fig. 1**: Schematische Darstellung einer bevorzugten Ausführungsform des Ultraschalldruckkopfes
- **Fig. 2**: Schematische Darstellung einer weiteren bevorzugten Ausführungsform des Ultraschalldruckkopfes
- **Fig. 3**: Außen- und Innendarstellung einer bevorzugten Variante der Sonotrode
- **Fig. 4**: Schematische Darstellung einer bevorzugten Variante eines Schneidkanals in der Sonotrode
- **Fig. 5**: Schnittansicht einer bevorzugten Ausführungsform des Druckkopfes
- **Fig. 6**: Darstellung des Druckkopfes gemäß Fig. 5 für einen Schneidevorgang

### Detaillierte Beschreibung der Figuren

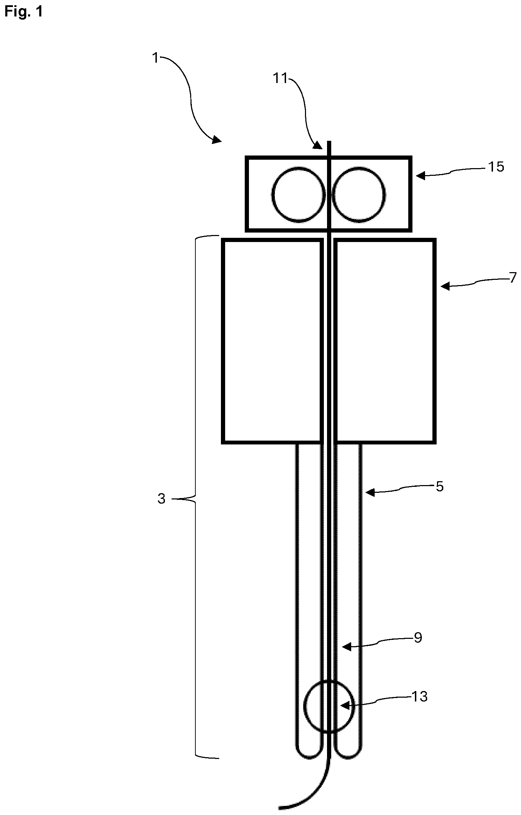

Fig. 1 zeigt eine bevorzugte Ausführungsform des Ultraschalldruckkopfes **1.** Der Ultraschalldruckkopf **1** umfasst eine Ultraschalleinheit **3** umfassend eine schwingfähige Sonotrode **5** und eine Konvertereinheit **7,** wobei die Sonotrode **5** einen Führungskanal **9** zur Führung eines Filaments **11** besitzt. Ferner umfasst der Ultraschalldruckkopf **1** eine Schneideinheit **13.** Die Schneideinheit **13** ist dazu konfiguriert, das Filament innerhalb des Führungskanals **9** der Sonotrode **5** zu schneiden oder zu scheren.

Durch den erfindungsgemäßen Ultraschalldruckkopf **1** ergibt sich ein wesentlicher Vorteil darin, dass der Schneidprozess so nah wie möglich am Austritt stattfindet und dadurch die Auszuglänge des geschnittenen Filaments **11** gering ist. Dadurch sind sehr kurze Extrusionswege möglich. Die Distanz zwischen Schnittpunkt und Austritt bestimmt die Mindestextrusionslänge. Wenn die Extrusionswege kürzer sind, muss weniger Zeit damit verbracht werden, das Filament **11** zu fördern. Das bedeutet, dass ein 3D-Drucker, der den Ultraschalldruckkopf **1** umfasst, schneller arbeiten kann, was zu einer insgesamt höheren Druckgeschwindigkeit führt. Kürzere Extrusionswege ermöglichen weiterhin eine präzisere Steuerung des Filamentflusses. Dies reduziert das Risiko von Unterextrusion oder Überextrusion, was zu einer besseren Druckqualität führt.

Ein weiterer Vorteil, der durch den Ultraschalldruckkopf **1** erreicht wird, ist dass das brüchige Filament in dem Führungskanal **9** stabil und schonend von einer Fördereinheit **15** durch die Konvertereinheit **7,** der Sonotrode **5,** der Schneideinheit **13** bis zur Sonotrodenspitze geführt wird. Mithin kann das Filament durch den Führungskanal **9** derart geführt werden, dass es nicht übermäßig beansprucht wird, knickt oder reißt. Eine harte oder ungeschickte Führung könnte zu einer Beschädigung des Filaments führen, was die Extrusion beeinträchtigen würde. Eine gleichmäßige und stabile Führung des Filaments wird erreicht. Dies trägt zu einer konstanten Extrusion und damit zu einer gleichmäßigen Druckqualität bei. Die Fördereinheit **15** sorgt dafür, dass das Filament **11** mit der richtigen Geschwindigkeit und unter konstantem Druck in den Führungskanal **9** gelangt, was für präzise Druckergebnisse und eine gleichmäßige Materialextrusion vorteilhaft ist.

Die Schneideinheit **13** ist hierbei in der Sonotrode **5** integriert. Die integrierte Schneideinheit **13** ermöglicht einen sehr kompakten Aufbau des Ultraschalldruckkopfes **1.** Dadurch wird die maximale Ausnutzung des Bauraums ermöglicht. Der kompakte Aufbau ist zudem weniger anfällig für Vibrationen. Durch den Freiraum im Bereich der Sonotrodenspitze eignet sich der Druckkopf für robotergeführtes 3D-Drucken und dreidimensional gekrümmte Oberflächen. Durch die höhere Kompaktheit liegt eine geringere Masse des Ultraschalldruckkopfes **1** vor. Dies reduziert die Trägheit, was zu einer präziseren Steuerung bei schnellen Bewegungen und kurzen Druckzeiten führt. Dadurch werden Fehler wie Wellenbildung oder unsaubere Drucklinien vermieden.

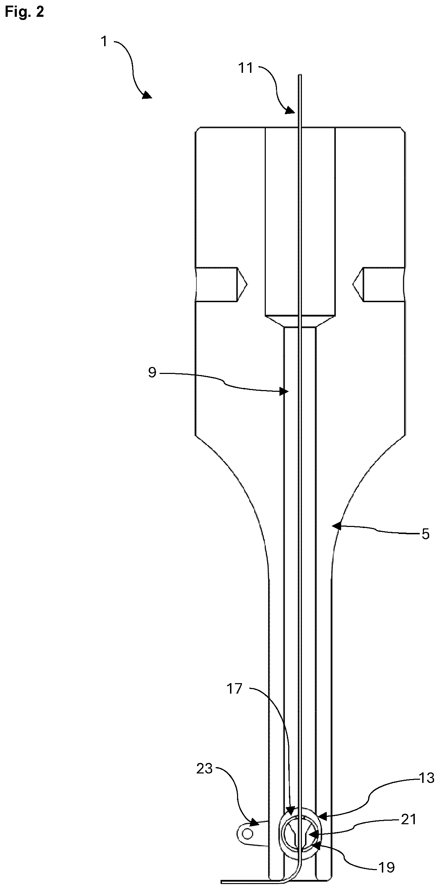

Fig. 2 zeigt eine bevorzugt Ausführungsform des Ultraschalldruckkopfes **1.** In der dargestellten Ausführungsform ist die Schneideinheit **13** im Wesentlichen senkrecht zum Führungskanal **9** orientiert. Die Schneideinheit **13** umfasst ein Statorelement **19** und ein Rotorelement **21.**

Das Statorelement **19** ist als statische äußere Hülse ausgebildet und das Rotorelement **21** ist als rotierender innerer Zylinder ausgebildet, welcher anliegend an der äußeren Hülse rotiert, wobei der innere Zylinder ein Schneidelement umfasst, welches das Filament schneiden oder abscheren kann. Alternativ kann das Statorelement **19** in Form eines statischen inneren Zylinders ausgebildet sein und das Rotorelement in Form einer rotierenden äußeren Hülse ausgebildet sein, welche anliegend an dem inneren Zylinder rotiert, wobei die äußere Hülse das Schneidelement umfasst, welches das Filament schneiden oder abscheren kann.

Das Statorelement **19** ist hierbei der stationäre Teil der Schneideeinheit **13** und bleibt während des Betriebs unbewegt. Das Rotorelement ist hierbei ein beweglicher Teil der Schneideeinheit **13,** der vorzugsweise während des Betriebs eine Rotationsbewegung ausführen kann. Das Rotorelement **21** umfasst ein Schneidelement, mit dem das Filament **11** geschnitten oder geschert werden kann. Die Rotation des Rotorelementes **21** kann bevorzugt mechanisch, beispielsweise durch einen Motor, und/oder elektromagnetisch gesteuert werden. In der Fig. 2 wird die Schneideinheit **13** durch einen Antriebshebel **23** betätigt.

Das Rotorelement **21** kann sich in Kontakt mit dem Filament **11** drehen und sorgt hierdurch dafür, dass das Filament **11** in Stücken oder Fäden abgetragen wird, um eine saubere und präzise Form für das mittels des Ultraschalldruckkopfes **1** herstellbare Bauteil zu erhalten. Das Statorelement **19** bleibt fest und kann eine unterstützende Rolle beim Führen des Rotors übernehmen und/oder das Material in eine bestimmte Richtung lenken.

Die Kombination von Rotorelement **21** und Statorelement **19** ermöglicht eine präzise Kontrolle der Schneideprozesse, wodurch der Ultraschalldruckkopf 1 in der Lage ist, auch besonders komplexe Geometrien oder feine Details zu erzeugen.

Ferner ist beim Ultraschalldruckkopf 1 die Schneideinheit **13** von der Sonotrode entkoppelt. Die Entkopplung der Schneideinheit **13** von den Schwingungen der Sonotrode **5** erfolgt durch einen Spalt zwischen der Schneideinheit **13** und der Sonotrode **5.** Hierdurch kann die Sonotrode **5** frei schwingen.

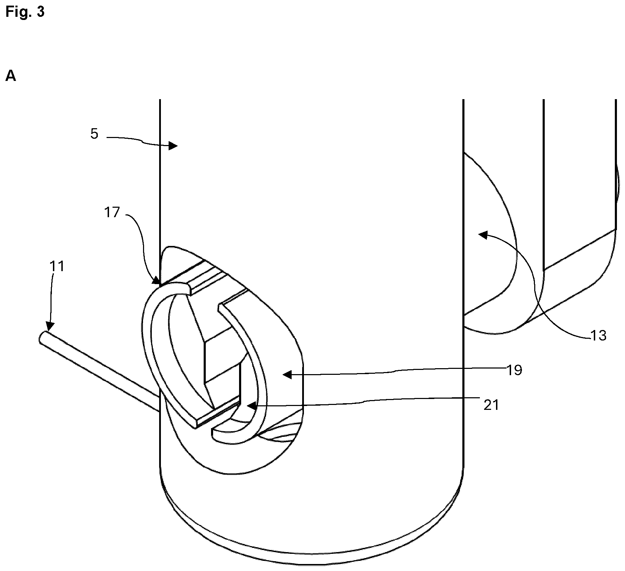

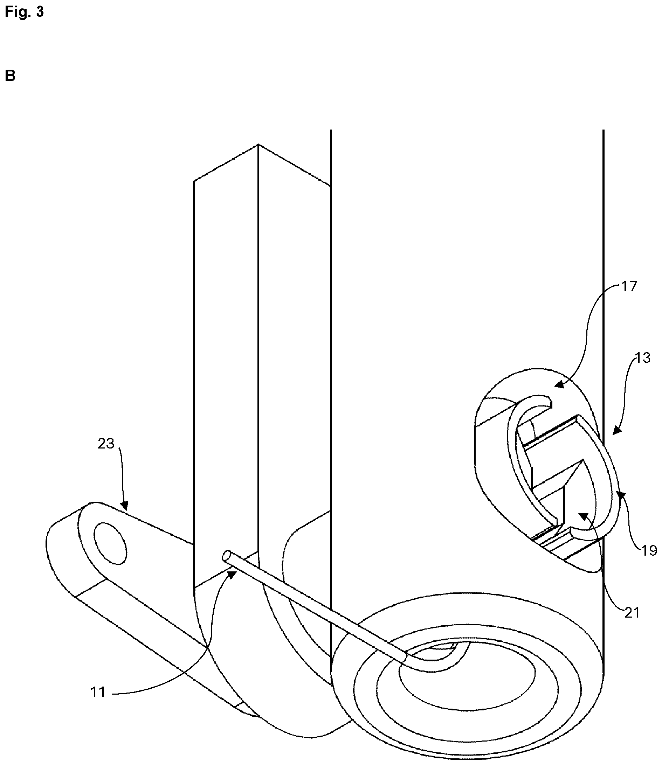

Fig. 3 zeigt eine mögliche Ausführungsform der Sonotrode **5.** Fig. 3A zeigt eine Außendarstellung der Sonotrode **5.** Fig. 3B zeigt eine Innendarstellung der Sonotrode **5.**

Das Statorelement **19** ist als eine statische äußere Hülse ausgebildet und das Rotorelement **21** als rotierender innerer Zylinder ausgebildet, welcher anliegend an der äußeren Hülse rotiert, wobei der innere Zylinder ein Schneidelement umfasst, welches das Filament schneiden oder abscheren kann.

Das Statorelement **19** ist hierbei eine feststehende, äußere Hülse, die den gesamten Schneidemechanismus stabilisiert und ein Gehäuse für den inneren Zylinder bildet. Diese Hülse hat bevorzugt eine zylindrische Form und bleibt während des Betriebs unbewegt. Sie kann vorzugsweise ein robustes und/oder widerstandsfähiges Material, wie z. B. Metall und/oder Kunststoff umfassen, das die mechanischen Belastungen der rotierenden Komponente aufnehmen kann. Die äußere Hülse könnte auch eine spezielle Form oder Oberfläche aufweisen, die den Kontakt zwischen dem inneren Zylinder und dem Filament optimiert und die Drehbewegung des Rotorelements **21** ohne zusätzliche Reibung oder Widerstand ermöglicht.

Die äußere Hülse dient vorzugsweise zusätzlich zur Stabilisierung auch der Führung des inneren Zylinders, indem sie diesen auf seiner Achse fixiert, sodass er präzise und mit minimalem Aufwand rotieren kann.

Der innere Zylinder ist das rotierende Element der Schneideinheit **13.** Er ist bevorzugt innerhalb der äußeren Hülse angeordnet und dreht sich um eine zentrale Achse. Der Zylinder ist so konstruiert, dass er passgenau und anliegend an der inneren Oberfläche der äußeren Hülse rotiert.

Der innere Zylinder weist ein Schneideelement auf, das direkt mit dem zu verarbeitenden Filament in Kontakt kommt. Dieses Schneideelement könnte in Form einer scharfen Kante oder eines Messers auf der Außenseite des Zylinders ausgebildet sein. Bei Rotation des Zylinders schneidet oder schert er das Filament ab. Das Rotorelement **21** dreht sich und sorgt dafür, dass das Filament **11** (oder überschüssiges Material) entlang der Schnittkante präzise abgetrennt wird. Der Zylinder könnte eine spezielle Geometrie besitzen, etwa eine spiralförmige Struktur oder Wellenform, um das Filament effektiver zu zerschneiden oder abzuscheren. Der innere Zylinder rotiert anliegend an der Innenseite der äußeren Hülse. Dieser enge Kontakt sorgt für eine präzise Führung des Rotors und stellt sicher, dass die Schneidkante immer richtig ausgerichtet ist und das Filament effizient geschnitten wird.

Die Wechselwirkung zwischen der statischen äußeren Hülse (dem Statorelement **19**) und dem rotierenden inneren Zylinder (dem Rotorelement **21**) ermöglicht eine präzise Schneidtechnik. Durch die enge Passung und die kontinuierliche Rotation des inneren Zylinders wird ein sauberer Schnitt mit minimalem Widerstand erzielt, was die Qualität des 3D-Drucks verbessert. Diese Anordnung von Statorelement **19** und Rotorelement **21** bietet eine einfache, aber effiziente Lösung zum Schneiden oder Abscheren von Filamenten **11** während des Druckprozesses. Der innere-Zylinder rotiert anliegend an der äußeren Hülse und sorgt durch das Schneidelement **13** für präzise und saubere Schnitte, was eine hohe Druckqualität unterstützt und gleichzeitig eine stabile und langlebige Funktionsweise gewährleistet.

Alternativ kann das Statorelement **19** in Form eines statischen inneren Zylinders ausgebildet und das Rotorelement **21** in Form einer rotierenden äußeren Hülse ausgebildet sein, welche anliegend an dem inneren Zylinder rotiert, wobei die äußere Hülse das Schneidelement **13** umfasst, welches das Filament **11** schneiden oder abscheren kann.

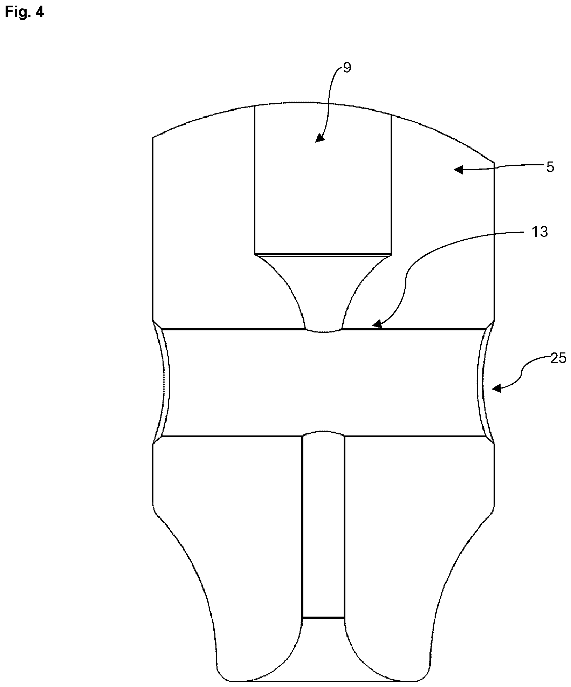

Fig. 4 zeigt eine bevorzugte Ausführung der Sonotrode **5.** Hierbei ist ein Schneidkanal **25** in der Sonotrode **5** eingebracht. Die Schneideinheit **13** ist hierbei derart ausgebildet, dass das Schneidelement, das im Führungskanal **9** der Sonotrode **5** geführte Filament **11** durch eine Translationsbewegung schneidet oder abschert, wobei das Schneidelement in einer Ruheposition außerhalb der Sonotrode **5** vorliegt, und zum Schneiden anliegend durch einen im Wesentlichen senkrecht zum Führungskanal **9** verlaufenden Schneidkanal **25** in die Sonotrode **5** eingeführt wird.

Das Schneidelement liegt außerhalb der Sonotrode **5** in einer Ruheposition, was insbesondere bedeutet, dass es zunächst keinen Kontakt zum Filament hat, solange keine Schneidebewegung erforderlich ist. Diese Position schützt sowohl das Schneideelement als auch das Filament **11** davor, unbeabsichtigt geschnitten zu werden. Das Schneideelement wird durch eine Translationsbewegung in den Schneidkanal **25** eingeführt, wobei es eine im Wesentlichen senkrechte Bewegung zum Führungskanal **9** beschreibt. Diese Bewegung bevorzugt durch eine Steuerung, beispielsweise eine mechanische Steuerung, pneumatische oder elektrische Steuerung erzeugt werden. Hierdurch kann das Schneidelement gezielt in den Schneidkanal **25** gebracht werden. Auch ein Antriebshebel **23** kann für die Steuerung der Schneideinheit, insbesondere des Schneidelementes, zum Einsatz kommen.

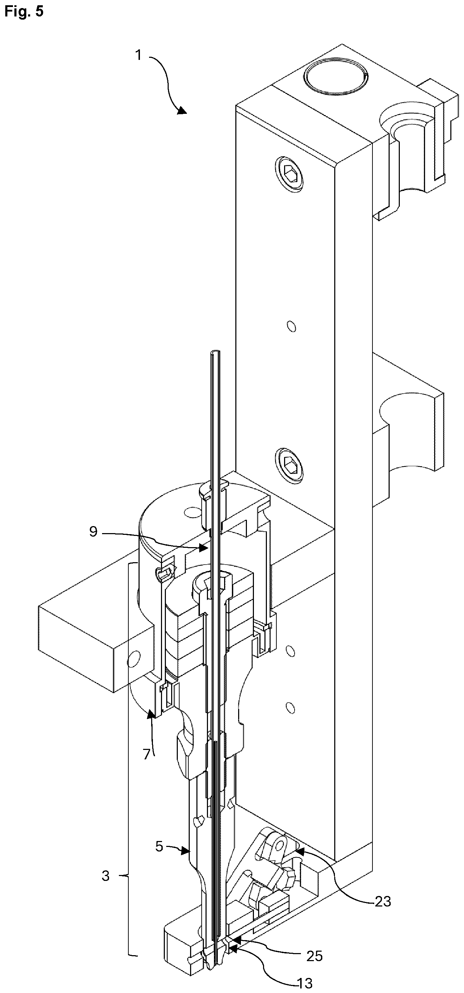

Fig. 5 zeigt eine bevorzugte Ausführungsform des Ultraschalldruckkopfes **1.** Der Ultraschalldruckkopf **1** umfasst eine Ultraschalleinheit **3** umfassend eine schwingfähige Sonotrode **5** und eine Konvertereinheit **7,** wobei die Sonotrode **5** einen Führungskanal **9** zur Führung eines Filaments **11** besitzt. Ferner umfasst der Ultraschalldruckkopf **1** eine Schneideinheit **13.** Die Schneideinheit **13** ist dazu konfiguriert, das Filament innerhalb des Führungskanals **9** der Sonotrode **5** zu schneiden oder zu scheren. Die Schneideinheit **13** umfasst ein Schneidelement. Das Schneidelement liegt in einer Ruheposition außerhalb der Sonotrode **5** vor. Zum Schneiden wird das Schneidelement anliegend durch einen im Wesentlichen senkrecht zum Führungskanal **9** verlaufenden Schneidkanal **25** in die Sonotrode **5** eingeführt.

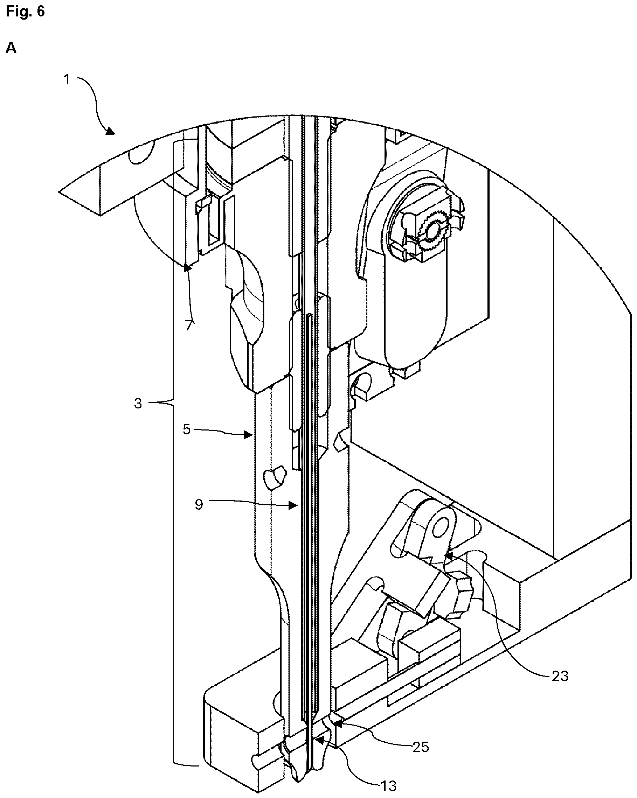

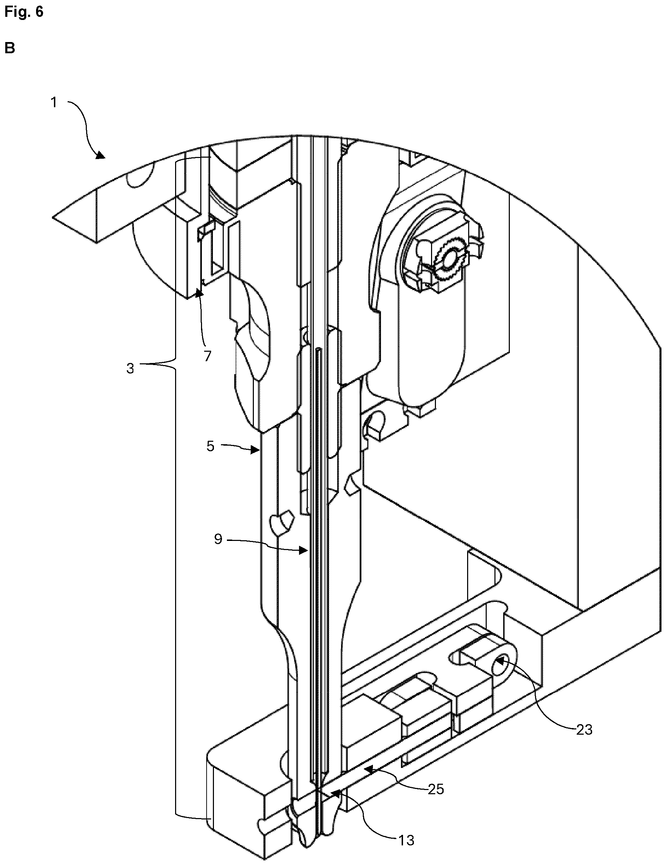

Fig. 6 zeigt einen Schneidevorgang mittels eines in Fig. 5 dargestellten Ultraschalldruckkopfes **1.**

Fig. 6A zeigt den Ultraschalldruckkopf **1** vor dem Schneidevorgang, während Fig. 6B den Ultraschalldruckkopf nach dem Schneidevorgang darstellt.

Das Schneideelement der Schneideinheit **13** wird durch eine Translationsbewegung in den Schneidkanal **25** eingeführt, wobei es eine im Wesentlichen senkrechte Bewegung zum Führungskanal **9** beschreibt. Diese Bewegung kann durch eine Steuerung, beispielsweise eine mechanische Steuerung, pneumatische oder elektrische Steuerung erzeugt werden. Hierdurch kann das Schneidelement gezielt in den Schneidkanal **25** gebracht werden. Hierbei wird die Translationsbewegung durch einen Antriebshebel **23** gesteuert.

Der Schneidkanal **25** verläuft im Wesentlichen senkrecht zum Führungskanal **9,** in dem das Filament **11** geführt wird. Der im Wesentlichen senkrechte Verlauf stellt vorteilhaft sicher, dass das Schneidelement exakt in die Richtung geführt wird, in der der Schnitt durchgeführt werden muss.

Der Schneidkanal **25** ermöglicht es dem Schneidelement, präzise in die Sonotrode **5** einzutreten und das Filament **11** zu durchtrennen. Durch die Bewegung entlang des Schneidkanals **25** wird das Schneidelement von der Ruheposition an die Schnittstelle geführt, wodurch das Filament **11** entlang der vorgesehenen Linie geschnitten wird.

Wenn der Schneide- oder Schervorgang eingeleitet wird, kann bevorzugt das Schneidelement über eine Steuerung aktiviert werden, sodass es aus seiner Ruheposition heraus in den Schneidkanal **25** eingeführt wird. Diese Bewegung erfolgt im Wesentlichen senkrecht zum Führungskanal **9,** also senkrecht zur Ausrichtung des Filaments **11.** Das Schneidelement dringt durch den Schneidkanal **25** in die Sonotrode **5** ein, um das Filament **11** zu schneiden. Die Bewegung ist kontrolliert, sodass das Schneidelement nicht nur präzise, sondern auch in der richtigen Geschwindigkeit auf das Filament trifft. Nachdem der Schnitt durchgeführt wurde, wird das Schneideelement wieder in seine Ruheposition zurückgeführt, sodass es für den nächsten Schneidevorgang vorbereitet ist. Dies geschieht ebenfalls durch eine Translationsbewegung. In der Ruheposition bleibt das Schneideelement außerhalb der Sonotrode **5** und ist von den Filamenten **11** entfernt, was verhindert, dass es während des weiteren Betriebs unbeabsichtigt in Kontakt mit dem Filament **11** kommt.

Durch die gezielte Translationsbewegung wird das Filament **11** mit höchster Präzision und Effizienz geschnitten. Der Schnitt erfolgt sehr sauber, mit minimalem Materialverlust und ohne die Gefahr von Verformungen oder Brüchen des Filaments **11.** Weiterhin ermöglicht es die Ruheposition des Schneidelements außerhalb der Sonotrode **5,** dass das gleiche Schneidelement für viele Schneidevorgänge verwendet werden kann, ohne unnötigen Verschleiß oder Abrieb. Außerdem kann die Positionierung des Schneidelements flexibel angepasst werden, um verschiedene Schneidanforderungen zu erfüllen.

### Bezugszeichenliste

- 1: Ultraschalldruckdruckkopf
- 3: Ultraschalleinheit
- 5: Sonotrode
- 7: Konvertereinheit
- 9: Führungskanal
- 11: Filament
- 13: Schneideinheit
- 15: Fördereinheit
- 17: Spalt
- 19: Statorelement
- 21: Rotorelement
- 23: Antriebshebel
- 25: Schneidkanal

## Patentansprüche

1. Ultraschalldruckkopf (1) zum Endlosfaser-Druck, umfassend
- eine Ultraschalleinheit (3) umfassend eine schwingfähige Sonotrode (5) und eine Konvertereinheit (7), wobei die Sonotrode (5) einen Führungskanal (9) zur Führung eines Filaments (11) besitzt;
- eine Schneideinheit (13),
**dadurch gekennzeichnet, dass**
die Schneideinheit (13) dazu konfiguriert ist, das Filament (11) innerhalb des Führungskanals (9) der Sonotrode (5) zu schneiden oder zu scheren.

2. Ultraschalldruckkopf (1) gemäß dem vorherigen Anspruch
**dadurch gekennzeichnet, dass**
der Ultraschalldruckkopf (1) eine Fördereinheit (15)umfasst, die dazu konfiguriert ist, das Filament (11) in den Führungskanal (9) der Sonotrode (5) einzuführen.

3. Ultraschalldruckkopf (1) gemäß einem oder mehreren der vorherigen Ansprüche
**dadurch gekennzeichnet, dass**
die Sonotrode (5) und die Konvertereinheit (7) eine bauliche Einheit bilden, wobei die Sonotrode (5) und die Konvertereinheit (7) unlösbar miteinander verbunden sind.

4. Ultraschalldruckkopf (1) gemäß einem oder mehreren der vorherigen Ansprüche
**dadurch gekennzeichnet, dass**
der Ultraschalldruckkopf (1) kühlbar ist, wobei eine Kühlluft zuerst durch die Konvertereinheit (7) geleitet wird, anschließend über die Sonotrode (5) strömt und dann auf ein Bauteil trifft.

5. Ultraschalldruckkopf (1) gemäß einem oder mehreren der vorherigen Ansprüche
**dadurch gekennzeichnet, dass**
die schwingungsfähige Sonotrode (5) mit einer Oszillationsfrequenz zwischen 15 kHz bis 50 kHz oszilliert.

6. Ultraschalldruckkopf (1) gemäß einem oder mehreren der vorherigen Ansprüche
**dadurch gekennzeichnet, dass**
die schwingungsfähige Sonotrode (5) als rotationssymmetrische Rundsonotrode ausgebildet ist.

7. Ultraschalldruckkopf (1) gemäß einem oder mehreren der vorherigen Ansprüche
**dadurch gekennzeichnet, dass**
der Führungskanal (9) der Sonotrode (5) einen Durchmesser von 0,5 - 3 mm, bevorzugt 0,75 bis 1,25 mm, besonders bevorzugt 0,85 bis 1,15 mm, ganz besonders bevorzugt 1 mm besitzt, und/oder geradlinig ausgebildet ist
und/oder
ein Austrittsradius der Sonotrode (5) zwischen 0,5 - 5 mm, bevorzugt zwischen 1 - 3 mm, besonders bevorzugt bei 1,8 mm liegt.

8. Ultraschalldruckkopf (1) gemäß einem oder mehreren der vorherigen Ansprüche
**dadurch gekennzeichnet, dass**
das Material aus dem die Sonotrode (5) besteht mindestens an einer Sonotrodenspitze umfassend den Austrittsradius ein gehärtetes Material umfasst und/oder eine harte Beschichtung aufweist.

9. Ultraschalldruckkopf (1) gemäß einem oder mehreren der vorherigen Ansprüche
**dadurch gekennzeichnet, dass**
ein Schneiden des Filaments (11) innerhalb des Führungskanals (9) der Sonotrode (5) mit einem Abstand von ≤30 mm, bevorzugt ≤20 mm, besonders bevorzugt <10 mm von einer Austrittsstelle Sonotrode (5) erfolgt.

10. Ultraschalldruckkopf (1) gemäß einem oder mehreren der vorherigen Ansprüche
**dadurch gekennzeichnet, dass**
die Schneideinheit (13) von der Schwingung der Sonotrode (5) entkoppelt vorliegt, wobei bevorzugt eine Entkopplung der Schneideinheit (13) von den Schwingungen der Sonotrode (5) durch einen Spalt (17) zwischen der Schneideinheit (13) und der Sonotrode (5) erfolgt.

11. Ultraschalldruckkopf (1) gemäß einem oder mehreren der vorherigen Ansprüche
**dadurch gekennzeichnet, dass**
die Schneideinheit (13) im Wesentlichen senkrecht zum Führungskanal (9) orientiert vorliegt und ein Statorelement (19) und ein Rotorelement (21) umfasst, wobei
- das Statorelement (19) als statische äußere Hülse ausgebildet ist und das Rotorelement (21) als rotierender innerer Zylinder ausgebildet ist, welcher anliegend an der äußeren Hülse rotiert, wobei der innere Zylinder ein Schneidelement umfasst, welches das Filament schneiden oder abscheren kann;
- oder alternativ das Statorelement (19) in Form eines statischen inneren Zylinders ausgebildet ist und das Rotorelement (21) in Form einer rotierenden äußeren Hülse ausgebildet ist, welche anliegend an dem inneren Zylinder rotiert, wobei die äußere Hülse das Schneidelement umfasst, welches das Filament schneiden oder abscheren kann.

12. Ultraschalldruckkopf (1) gemäß einem oder mehreren der vorherigen Ansprüche
**dadurch gekennzeichnet, dass**
die Schneideinheit (13) eine obere Eintrittsöffnung und eine untere Austrittsöffnung für das Filament (11) aufweist, wobei sowohl eine äußere Hülse als auch ein innerer Zylinder der Schneideeinheit (13) jeweils eine obere Eintrittsöffnung sowie eine untere Austrittsöffnung aufweisen, wobei bevorzugt
- die untere Austrittsöffnung des inneren Zylinders gegenüber der oberen Eintrittsöffnung des inneren Zylinders verjüngt ist, sodass zwischen Eintrittsöffnung und Austrittsöffnung des inneren Zylinders ein Trichter entsteht, und/oder
- die obere Eintrittsöffnung der äußeren Hülse gegenüber der unteren Austrittsöffnung der äußeren Hülse vergrößert ist.

13. Ultraschalldruckkopf (1) gemäß einem oder mehreren der vorherigen Ansprüche
**dadurch gekennzeichnet, dass**
die Schneideinheit (13) derart ausgebildet ist, dass ein Schneidelement das im Führungskanal (9) der Sonotrode (5) geführte Filament (11) durch eine Translationsbewegung schneidet oder abschert, wobei das Schneidelement in einer Ruheposition außerhalb der Sonotrode vorliegt, und zum Schneiden anliegend durch einen im Wesentlichen senkrecht zum Führungskanal verlaufenden Schneidkanal (25) in die Sonotrode (5) eingeführt wird.

14. Ultraschalldruckkopf gemäß dem vorherigen Anspruch
**dadurch gekennzeichnet, dass**
zum Schneidkanal (25) hinführend eine Verjüngung des Führungskanals (9) in Form eines Trichters vorliegt
und/oder
der Führungskanal (9) in einem Bereich zwischen dem Schneidkanal (25) und einer Austrittsstelle des Filaments (11) am unteren Ende der Sonotrode (5) einen geringeren Durchmesser aufweist als in einem Bereich zwischen einem Eintrittspunkt des Filaments (11) in die Sonotrode (5) und dem Schneidkanal (25).

15. Verwendung eines Ultraschalldruckkopf (1) gemäß einem oder mehreren der vorherigen Ansprüche, für Anwendungen in der Fertigungs- und Verbindungstechnologie, wie Additive Fertigung (3D-Druck), Verschweißen von Kunststoffen, Verarbeitung von Faserhalbzeugen, Ultraschallschweißen, Aufdrucken von Faserstrukturen auf Kunststoffbauteile.
